(19) Europäisches Patentamt / European Patent Office / Office européen des brevets

(11) **EP 1 730 032 B1**

(12) **FASCICULE DE BREVET EUROPEEN**

(45) Date de publication et mention de la délivrance du brevet:
**11.07.2007 Bulletin 2007/28**

(21) Numéro de dépôt: **05742630.6**

(22) Date de dépôt: **24.03.2005**

(51) Int Cl.:
**B64C 27/00** *(2006.01)*

(86) Numéro de dépôt international:
**PCT/FR2005/000675**

(87) Numéro de publication internationale:
**WO 2005/100153 (27.10.2005 Gazette 2005/43)**

(54) **PROCÉDÉ ET DISPOSITIF POUR MINIMISER LE BRUIT ÉMIS PENDANT LE DÉCOLLAGE ET L'ATTERRISSAGE D'UN GIRAVION.**

VERFAHREN UND VORRICHTUNG ZUR MINIMIERUNG DES START- UND LANDELÄRMS VON DREHFLÜGELFLUGZEUGEN

METHOD AND DEVICE FOR MINIMISING ROTORCRAFT TAKE-OFF AND LANDING NOISE

(84) Etats contractants désignés:
**GB IT NL**

(30) Priorité: **30.03.2004 FR 0403298**

(43) Date de publication de la demande:
**13.12.2006 Bulletin 2006/50**

(73) Titulaire: **EUROCOPTER**
**13725 Marignane Cédex (FR)**

(72) Inventeur: **MARZE, Henri-James**
**F-13340 Rognac (FR)**

(74) Mandataire: **Renaud-Goud, Thierry**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
**EP-A- 0 945 841**

• **PATENT ABSTRACTS OF JAPAN vol. 1998, no. 01, 30 janvier 1998 (1998-01-30) & JP 09 254897 A (COMMUTER HERIKOPUTA SENSHIN GIJUTSU KENKYUSHO), 30 septembre 1997 (1997-09-30) cité dans la demande & JP 02 736045 B2 2 avril 1998 (1998-04-02)**
• **PATENT ABSTRACTS OF JAPAN vol. 018, no. 569 (M-1695), 31 octobre 1994 (1994-10-31) & JP 06 206594 A (MITSUBISHI HEAVY IND LTD), 26 juillet 1994 (1994-07-26)**

Printed by Jouve, 75001 PARIS (FR)

## Description

La présente invention concerne un procédé et un dispositif pour minimiser le bruit émis pendant le décollage et l'atterrissage d'un giravion, en particulier d'un hélicoptère.

Plus particulièrement, elle s'applique à la réduction des nuisances acoustiques produites par un giravion à proximité d'un héliport ou d'une hélisurface de façon à minimiser par une procédure à moindre bruit le nombre de personnes soumises à ces excès de bruit.

D'une façon générale, les bruits émis par un giravion comprennent notamment :

- le bruit propre de fonctionnement des rotors (en l'absence de surbruit),

- le bruit de compressibilité sur la pale avançante du rotor principal (effet de Mach),

- le bruit d'interaction pales/tourbillons d'extrémités de pale connu sous l'appellation anglaise «Blade Vortex Interaction» ou BVI,

- le bruit d'interaction pales/nappes tourbillonnaires connu sous l'appellation anglaise «Blade Wake Interaction» ou BWI,

- le bruit du rotor arrière,

- le bruit d'interaction entre le rotor principal et le rotor arrière.

On sait que dans certaines phases de vol, les giravions génèrent des bruits importants alors que la gêne est minimale pour d'autres phases d'évolution.

Dans le cadre de la présente invention, on entend par procédure à moindre bruit une combinaison d'une trajectoire géométrique permettant d'atteindre ou de quitter une hélisurface et des paramètres de pilotage, à savoir deux composantes de la vitesse aérodynamique, laquelle détermine la génération du bruit du giravion, notamment la vitesse air sur trajectoire et la vitesse air verticale, cette combinaison étant destinée à réduire l'aire et d'adapter la forme d'une empreinte sonore « iso-gène » au sol, acceptable autour d'un site.

Il ne s'agit pas seulement de réduire l'émission acoustique mais il convient également de minimiser la gêne supplémentaire, introduite par l'effet de la durée du bruit, qui dépend directement de la vitesse du giravion.

En pratique, on peut diminuer la gêne au sol soit en augmentant la distance entre un giravion et un observateur, soit en diminuant la génération de la gêne à la source, soit enfin en imposant au giravion la plus grande vitesse possible de déplacement. Une procédure à moindre bruit combine ces trois paramètres pour donner les meilleurs résultats.

De façon usuelle, atterrir ou décoller avec un minimum de gêne au sol consiste donc d'une part à évoluer au travers des conditions de vol les moins bruyantes et d'autre part à maintenir en permanence la plus grande distance possible entre le sol et le giravion, notamment en conservant une pente de descente ou de montée aussi élevée que possible. Lorsque la distance entre l'hélicoptère et le sol devient trop faible pour résoudre le problème en réduisant la génération de la gêne à la source, il faut alors augmenter la distance latérale entre l'observateur et le giravion : c'est cette distance latérale qui définit la forme de l'empreinte « iso-gène ».

Cependant, les amplitudes et intensités de ces domaines d'excès de bruit et de bruit minimum sont fonction des conditions de vol propres à chaque site (altitude, pression, température) mais aussi des conditions de vol, comme la masse réelle de l'hélicoptère.

Il résulte de ces considérations qu'il conviendrait d'établir une procédure à moindre bruit optimale pour chaque cas de vol, ce qui est irréaliste dans la pratique.

On a en fait besoin d'une procédure si possible unique réalisant un compromis entre les différents cas de vol.

D'autre part, les sites réels sont soumis à des vents variables par exemple avec les saisons ou encore avec la hauteur au-dessus du sol, de sorte que le pilote ne peut pas se contenter de respecter les paramètres de pilotage (notamment la vitesse air sur trajectoire et la vitesse air verticale) qui auront été déterminés par vent nul pour suivre la trajectoire sol souhaitée. Sans aide, le pilote risque sinon d'engager le giravion dans une zone d'excès de bruit.

Pour tenter d'apporter une solution à ce problème, les documents JP 2736045 (JP 09254897) et EP 945841 divulguent chacun un dispositif permettant de remédier, au moins partiellement aux inconvénients précités. A cet effet, la procédure divulguée par le document JP 2736045 décrit un dispositif permettant de suivre une trajectoire d'atterrissage à moindre bruit, de façon manuelle ou automatique, en utilisant une base de données d'empreintes sonores préétablies. Ce dispositif présente l'inconvénient de ne pas pouvoir prendre en compte les conditions de vol présentes (vent, masse appareil, configuration externe,...).

Selon le procédé du JP2763045 (JP09254897), dans une étape de vols préliminaires, dans laquelle on utilise un giravion de référence correspondant à un giravion dudit type particulier, on fait une série de mesures sur le giravion de référence, en mesurant lors de vols préliminaires, les valeurs d'une pluralité de capteurs fixés à ce giravion de référence et représentatifs de l'émission acoustique pour n configurations du giravion de référence, déterminées par m masses dudit giravion de référence et q régimes de rotation du rotor principal. Le dispositif correspondant du JP2763045 (JP09254897) comporte un calculateur équipé d'une mémoire, un variomètre et un dispositif anémo-barométrique pour déterminer la vitesse verticale du giravion, ainsi qu'un moyen de visualisation.

Pour remédier à cette difficulté, le document EP 945841 propose un dispositif du même type mais en « boucle fermée », basé sur des mesures de bruit au sol transmises en temps réel à l'hélicoptère, de façon à sélectionner en permanence la trajectoire optimale. Toutefois, un tel dispositif présente l'inconvénient de requérir une installation de microphones au sol, implantés sur la zone d'atterrissage (longue de plusieurs kilomètres, généralement) en association avec un système de traitement et d'émission des mesures acoustiques vers le giravion.

En outre, l'expérience lors de campagnes de mesures acoustiques montre que les corrections apportées par les mesures en temps réel, prévues dans le document EP 945841, risquent d'être inexploitables en raison des très grandes fluctuations possibles dans les mesures, en cas de vent fort et irrégulier en particulier. En effet, la vitesse de propagation du bruit étant du même ordre de grandeur que celle des perturbations dues au vent, un retard important est introduit dans les actions correctrices, ce qui entraîne des écarts par rapport à la trajectoire optimale, voire une amplification du bruit par rapport à une trajectoire non corrigée.

Une campagne de mesures sur un hélicoptère « Dauphin » a montré que les couloirs correspondant au critère de bruit recherché, c'est-à-dire inférieur à celui d'un survol en palier à bruit minimal, par exemple, sont très étroits et que tout écart par rapport à ces couloirs se traduit rapidement par un dépassement du critère. La procédure doit donc être très précise et ne supporte pas des corrections qui, pour les raisons physiques évoquées ci-dessus, ne peuvent être que relativement grossières.

La présente invention a pour objet de remédier à ces inconvénients et de proposer une procédure de décollage et d'atterrissage d'un giravion satisfaisant simultanément les critères suivants :

a) pour un giravion d'un type particulier, la trajectoire de vol par rapport au sol doit rester sensiblement identique ce qui impose de maintenir sensiblement constante la pente de cette trajectoire quelles que soient les conditions atmosphériques (vent en particulier) et la configuration du giravion (masse en particulier),

b) tout au long de cette trajectoire, deux paramètres (la vitesse air sur trajectoire et la vitesse air verticale, par exemple) doivent être pilotés en fonction du vent moyen et des ascendances moyennes, à la hauteur du vol, sachant que l'on peut assimiler ce pilotage à celui de la pente air,

c) le niveau de la gêne acoustique tout au long de cette trajectoire doit être homogène, en prenant par exemple comme objectif la gêne produite par un survol en palier à moindre bruit, cette phase de vol correspondant au début de l'atterrissage à moindre bruit et aussi à la fin du décollage à moindre bruit.

On notera que la référence à la gêne produite par un survol en palier permet de définir la hauteur minimale de survol des zones sensibles au bruit qui respecte le niveau d'acceptabilité pour l'environnement. Cependant, tout autre critère du domaine de vol possible pourrait être retenu, par exemple une montée en vol stabilisé.

Selon l'invention, le procédé pour minimiser le bruit émis pendant le décollage et l'atterrissage d'un giravion de référence correspondant à un giravion d'un type particulier est remarquable en ce que :

a) on fait une série de mesures sur le giravion de référence, en mesurant lors de vols préliminaires, les valeurs d'une pluralité de niveaux acoustiques détectés par une pluralité de p capteurs fixés à ce giravion de référence et représentatifs de l'émission acoustique pour n configurations du giravion de référence, n étant le produit de :

-  m masses du giravion de référence,

-  q régimes de rotation du rotor principal,

-  r régimes de rotation du rotor arrière,

b) à partir de cette série de mesures, on établit une première série de n×p diagrammes représentant une série d'isoniveaux acoustiques, dans un système de coordonnées (vitesse air sur trajectoire, vitesse air verticale),

c) on transforme cette première série de diagrammes en une seconde série de n×p diagrammes représentant une série d'isoniveaux acoustiques dans le système de coordonnées (vitesse air sur trajectoire, vitesse air verticale) en effectuant :

- d'une part, une correction de bruit représentative d'une nuisance acoustique qui dépend de sa durée d'application,

- d'autre part, une correction pour corriger chaque masse en une masse apparente du giravion de référence qui résulte des conditions d'atmosphère à l'altitude du vol,

d) on sélectionne dans chaque diagramme de la seconde série de diagrammes la courbe d'isoniveau acoustique correspondant à un niveau de bruit maximal admissible,

e) on établit pour chaque masse apparente, l'enveloppe des courbes correspondant à un niveau de bruit maximal admissible dans le système de coordonnées (vitesse air sur trajectoire, vitesse air verticale) ce qui détermine m domaines de vol, pour lesquels le bruit est inférieur audit bruit maximal admissible,

f) on sélectionne, dans chaque domaine de vol, un domaine de fonctionnement, ce qui détermine un ensemble de m domaines de fonctionnement du giravion de référence.

Il convient de noter qu'il faut comprendre par courbe d'isoniveau acoustique au paragraphe d) ci-dessus soit une seule courbe continue, soit plusieurs tronçons de courbes.

Par ailleurs, l'examen des domaines de fonctionnement pour les configurations de masse testées en vol a montré que l'on peut définir une procédure d'atterrissage ou de décollage à moindre bruit d'un giravion commune à toutes les configurations de masse de cet appareil.

Par suite avantageusement, lors des procédures de décollage et d'atterrissage d'un giravion du type particulier de giravion:

a) on calcule la masse équivalente instantanée de ce giravion,

b) on détermine le point de fonctionnement sans vent et le domaine de fonctionnement instantané avec vent du giravion pour cette masse équivalente instantanée à partir de l'ensemble des m domaines de fonctionnement dudit giravion de référence.

Ainsi, grâce à l'invention, on élabore une trajectoire optimale sur le plan acoustique à partir de mesures acoustiques de référence effectuées une seule fois sur ledit giravion de référence et uniquement à l'aide de mesures de niveaux acoustiques à partir de capteurs acoustiques disposés sur ledit giravion de référence.

De façon avantageuse, lesdits capteurs sont des microphones disposés de préférence sur le fuselage dudit giravion, à l'extérieur ou encore sur les éléments tournants (ou à proximité) tels que le rotor principal et le rotor arrière.

Il est également possible d'installer les capteurs acoustiques à l'intérieur du fuselage même si le bruit perçu à ce niveau est moins représentatif du bruit extérieur.

On notera que des mesures d'empreintes au sol ont permis de vérifier que chaque procédure d'atterrissage et de décollage élaborée selon l'invention à partir des mesures de capteurs embarqués correspond bien à une procédure à moindre bruit. Pour ce faire, la corrélation avec les mesures au sol a été effectuée sur plusieurs points significatifs de la trajectoire à moindre bruit.

Cette similitude permet de s'affranchir du réseau de microphones au sol, fragiles, coûteux et de mise en oeuvre délicate, pour élaborer une procédure à moindre bruit.

De plus, l'exploitation des mesures effectuées à partir de capteurs embarqués s'est révélée plus précise car les renseignements sont effectués pendant quelques secondes de vol stabilisé alors qu'à partir de capteurs au sol, les mesures restent instables en raison des fluctuations permanentes de la trajectoire et de l'atmosphère entre l'aéronef et le sol.

Par conséquent, selon l'invention, on établit une base de données acoustiques qui sont exploitées par la suite dans un processus de suivi de trajectoire, manuel ou automatique, rendu possible en toute sécurité avec les équipements aéronautiques actuels, tels que les variomètres et les installations anémo-barométriques ou encore tels que ceux divulgués dans les documents FR 2801966 et FR 2801967.

La présente invention concerne également un dispositif pour le pilotage d'un giravion d'un type particulier de giravion suivant des procédures de décollage et d'atterrissage à moindre bruit.

Selon l'invention, ledit dispositif est remarquable en ce qu'il comporte :

- un calculateur équipé d'une mémoire contenant les domaines de fonctionnement préétablis dudit giravion, ledit calculateur étant susceptible de déterminer automatiquement le point de fonctionnement sans vent et le domaine de fonctionnement avec vent correspondant à la masse équivalente instantanée dudit giravion,

- un variomètre et un équipement anémo-barométrique pour acquérir les valeurs de la vitesse air sur trajectoire et de la vitesse air verticale dudit giravion,

- un récepteur pour déterminer la vitesse sol et la position dans l'espace dudit giravion,

- un moyen de visualisation des consignes de pilotage élaborées par ledit calculateur,

- au moins une jauge de carburant par réservoir de carburant pour déterminer la masse instantanée dudit giravion.

Le récepteur déterminant la vitesse sol et la position dans l'espace du giravion peut être un récepteur GPS ou tout autre dispositif équivalent.

Par ailleurs, ledit dispositif peut comporter de plus un pilote automatique pour agir directement sur les gouvernes dudit giravion afin de gérer de façon automatique la procédure de décollage et d'atterrissage dudit giravion.

Ainsi, grâce à l'invention, la trajectoire de descente stabilisée, par exemple, est une droite pour faciliter la tâche du pilote aussi bien dans une procédure semi-automatique (suivi par le pilote des consignes affichées par le calculateur) que dans une procédure automatique (assurée entièrement par le pilote automatique) car dans tous les cas, le pilote doit pouvoir reprendre les commandes en cas de défaillance du pilote automatique ou du calculateur. Pour cela, il lui est nécessaire de pouvoir rapidement apprécier la cohérence des consignes affichées, ce qui n'est possible que pour une trajectoire simple.

De façon avantageuse, le dispositif conforme à l'invention permet également le maintien de performances maximales de montée ou de survol en palier accéléré ou décéléré en minimisant le bruit émis par un giravion du type particulier de giravion.

De plus, grâce à l'invention, la procédure à moindre bruit permet de s'affranchir des perturbations introduites par les vents moyens, verticaux et horizontaux, variables en fonction du temps et de l'altitude, en corrigeant en permanence les paramètres air dudit giravion.

Bien entendu, l'invention s'applique à tout type de giravion, y compris les appareils particuliers tels que le combiné ou encore le convertible. Par ailleurs, un tel giravion peut être muni d'un seul rotor principal ou de deux rotors en tandem, par exemple. De même, le rotor arrière peut être caréné (Fenestron®) ou non, par exemple.

Les figures du dessin annexé feront bien comprendre comment l'invention peut être réalisée. Sur ces figures, des références identiques désignent des éléments semblables.

La figure 1 montre schématiquement un giravion auquel on applique la présente invention.

La figure 2 illustre schématiquement la trajectoire d'un giravion, notamment pendant la phase d'atterrissage.

La figure 3A illustre le diagramme des vitesses d'un giravion en phase d'atterrissage avec une pente de trajectoire constante.

La figure 3B illustre les effets d'un vent de face sur un giravion en phase d'atterrissage.

La figure 3C illustre le diagramme des vitesses d'un giravion en phase d'atterrissage en présence d'un vent ascendant.

La figure 3D illustre le diagramme des vitesses d'un giravion en phase d'atterrissage en présence d'un vent quelconque.

La figure 4 fournit un exemple de trajectoire à moindre bruit depuis un vol en palier jusqu'à l'atterrissage.

La figure 5 est le schéma synoptique de l'application du procédé conforme à l'invention pour minimiser le bruit émis pendant le décollage et l'atterrissage d'un giravion.

La figure 6 montre un exemple de diagramme d'isoniveaux acoustiques établis sur la base de mesures effectuées à partir de l'utilisation de microphones.

La figure 7A illustre une zone de fonctionnement du giravion dans une procédure à moindre bruit et l'allure des lois de pilotage associées, passant par le point F de fonctionnement sans vent.

La figure 7B illustre les possibilités de correction de l'effet particulier d'un vent de face pour éviter les domaines de bruit exclus.

La figure 7C montre les diagrammes des vitesses relatifs à la figure 7B.

La figure 7D illustre le positionnement des points de fonctionnement effectifs FEF en présence d'un vent de face FF ou arrière FA.

La figure 7E présente un cas particulier pour lequel les points de fonctionnement effectifs peuvent constituer un point de vent limite.

La figure 8 est une représentation schématique du dispositif du suivi de trajectoire à moindre bruit pour un giravion en exploitation.

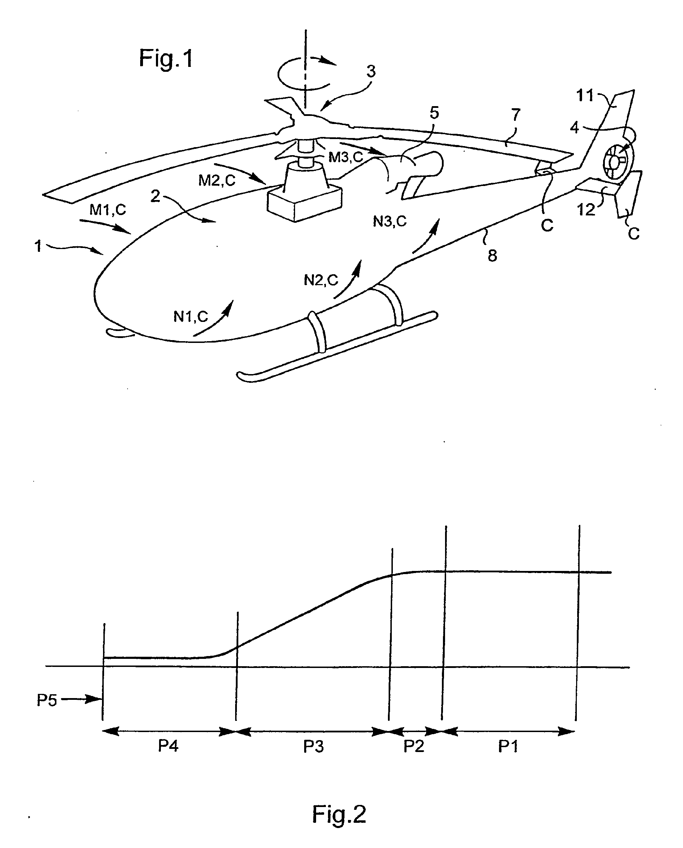

Le giravion 1 d'un type particulier de giravion, représenté sur la figure 1, et auquel on applique la présente invention comporte de façon usuelle un fuselage 2, un groupe moteur 5 qui est susceptible d'entraîner en rotation un rotor principal d'avance et de sustentation 3 composé de pales 7 et un rotor arrière anticouple 4. Le fuselage est prolongé vers l'arrière par une poutre de queue 8 à l'extrémité libre de laquelle sont disposés le rotor arrière 4, une dérive verticale 11 et un empennage horizontal 12.

Sur la figure 2, on a représenté la trajectoire la plus simple d'un giravion dans le cas, par exemple, d'un atterrissage. Pour rejoindre une zone d'atterrissage, cette trajectoire doit comporter quatre phases :

- une phase initiale de palier horizontal P1, au cours de laquelle la vitesse du giravion diminue, il s'agit alors d'une phase de survol décéléré (au décollage, il s'agirait d'une phase de survol accéléré).

- une courbe de raccordement P2 entre le palier et la descente stabilisée qui suit, correspondant à une augmentation de la vitesse air verticale VZA, la vitesse air sur trajectoire TA étant maintenue constante,

- une phase de descente stabilisée en ligne droite P3 se raccordant de façon sensiblement tangente à la courbe P2 et à la courbe P4 définie ci-dessous,

- une courbe de raccordement P4 depuis la descente stabilisée jusqu'au point de décision d'atterrissage P5 («Landing Decision Point» suivant l'appellation anglaise).

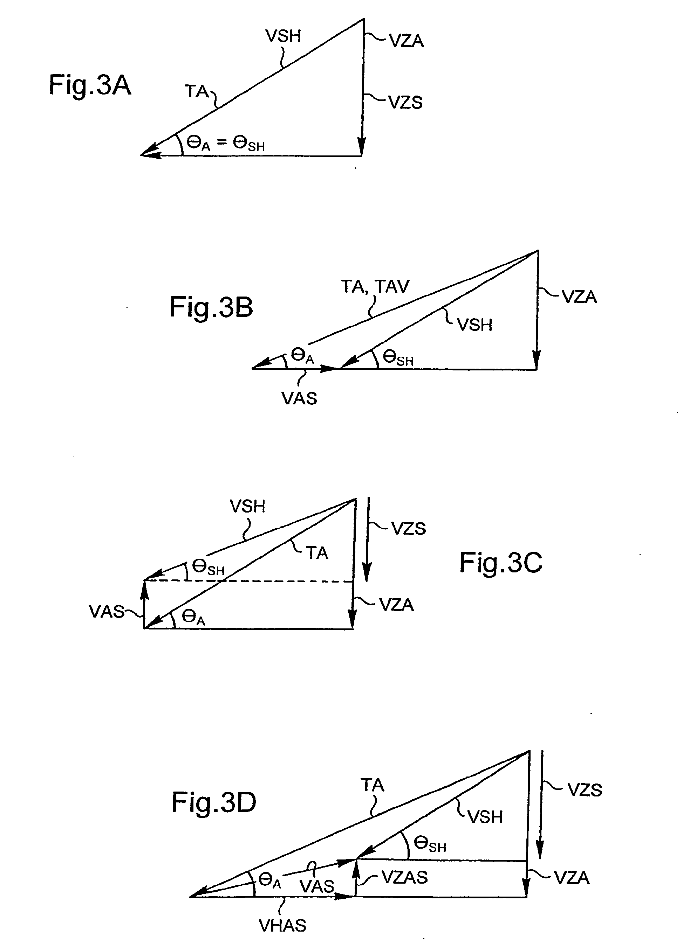

Les termes «vitesse air sur trajectoire TA» et «vitesse air verticale VZA», connus par l'homme du métier, correspondent aux définitions telles qu'illustrées par la figure 3A et fournie à titre d'exemple.

Sur cette figure 3A, le giravion se déplace dans la phase de descente stabilisée à une vitesse VSH par rapport au sol, égale par définition à la vitesse air sur trajectoire en absence de vent, en suivant une trajectoire de pente $\theta_{sH}$ par rapport au sol. Dans ce cas, il s'avère que les définitions de la vitesse air sur trajectoire TA et de la vitesse air verticale VZA correspondent aux remarques suivantes :

- la vitesse air sur trajectoire TA est égale à la vitesse VSH du giravion par rapport au sol,

- la pente $\theta_A$ de la vitesse air sur trajectoire TA par rapport au sol est égale à la pente $\theta_{SH}$ de la trajectoire,

- la vitesse air verticale VZA est égale à la composante verticale de la vitesse air TA sur trajectoire et à la composante verticale VZS de la vitesse VSH du giravion par rapport au sol.

En présence par exemple d'un vent de face de vitesse VAS (ou vitesse de l'air par rapport au sol), la vitesse air sur trajectoire TA est, selon la figure 3B, telle que $\overrightarrow{TA} + \overrightarrow{VAS} = \overrightarrow{VSH}$. La vitesse verticale du giravion VZS par rapport au sol est alors égale à la vitesse verticale VZA de l'air.

Toujours à titre d'exemple, la figure 3C illustre les effets d'un vent de vitesse VAS, alors ascendant. Dans ces conditions, on constate que la vitesse air sur trajectoire VZA est égale à la somme des normes de la vitesse du vent ascendant VAS et de la vitesse verticale VZS du giravion par rapport au sol.

A partir des figures 3B et 3C, on peut établir la figure 3D relative aux effets combinés d'un vent de face (horizontal) et d'un vent vertical représentant les deux composantes d'un vent global de vitesse VAS. Cette figure 3D ne nécessite pas de commentaires particuliers.

Il convient de noter que, selon l'invention, ladite phase de descente stabilisée est une portion de droite de pente constante par rapport au sol. De la sorte, le pilote conserve les mêmes appréciations et les mêmes réflexes dans cette phase de vol. Pour suivre cette droite, le pilote doit, par conséquent, ajuster en permanence la vitesse air sur trajectoire TA et la vitesse air verticale VZA pour tenir compte des perturbations introduites par le vent. Bien évidemment, par vent nul, la vitesse air sur trajectoire TA et la vitesse air verticale VZA seraient constantes, ce qui n'est pratiquement jamais le cas.

En référence à la trajectoire selon la figure 2 précédemment décrite, une procédure d'atterrissage (ou de décollage) du giravion fait correspondre à chaque point de la trajectoire un couple (TA-VZA), c'est-à-dire un point décrivant une courbe particulière dans une cartographie établie dans un système de coordonnées (TA, VZA).

Pour respecter des caractéristiques de bruit minimal, il faut, dans la représentation de la cartographie, que la courbe qui joint tous les couples (TA-VZA) correspondant à la procédure suivie, passent par des points dont le niveau acoustique reste inférieur au niveau maximal admissible.

Une procédure à faible bruit devra donc éviter des domaines exclus.

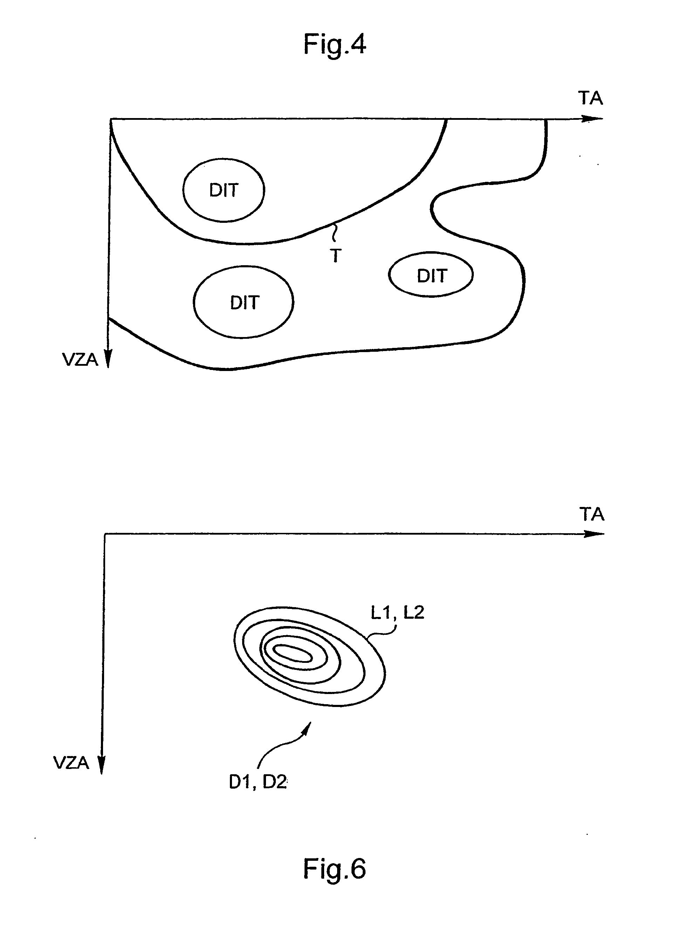

Toute procédure évitant les domaines exclus respecte donc le critère de moindre bruit défini initialement. La figure 4 montre un exemple de trajectoire T depuis un vol en palier jusqu'à l'atterrissage dans un système de coordonnées (TA, VZA), les domaines DIT ou domaines «exclus» correspondants à des domaines où le niveau acoustique est supérieur à un niveau maximal admissible.

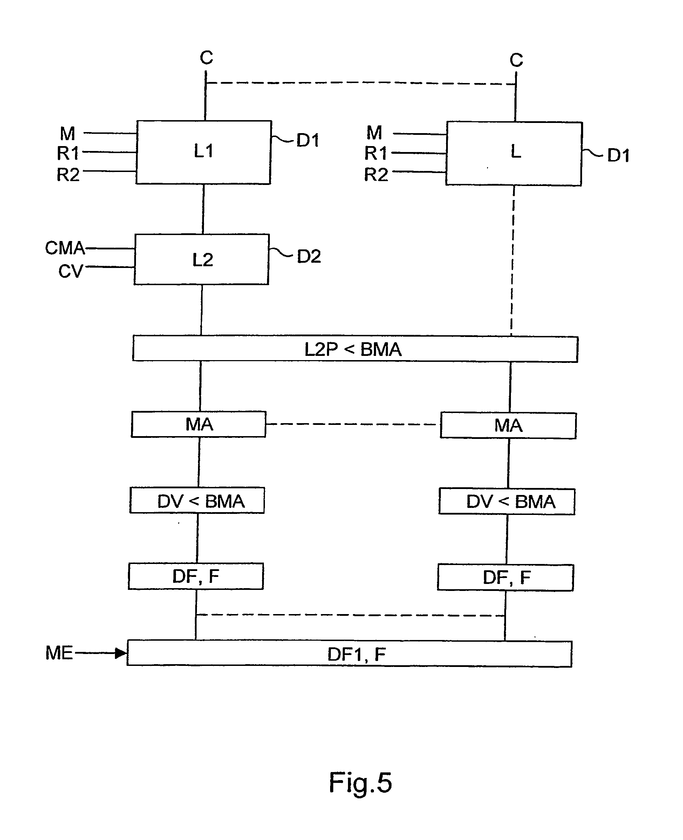

Pour ce faire, le procédé conforme à l'invention et dont les différentes phases sont schématisées sur la figure 5 présente au moins :

- une étape préliminaire,

- une étape ultérieure d'exploitation des résultats établis dans l'étape préliminaire.

Selon l'invention, dans ladite étape préliminaire, dans laquelle on utilise un giravion de référence correspondant à un giravion 1 du type particulier de giravion considéré (hélicoptères « Dauphin », « Puma »,....) pour établir une procédure de décollage et d'atterrissage à moindre bruit :

a) on fait une série de mesures sur le giravion de référence, en mesurant lors de vols préliminaires, les valeurs d'une pluralité de niveaux acoustiques détectés par une pluralité de p de capteurs C fixés à ce giravion de référence et représentatifs de l'émission acoustique pour n configurations du giravion de référence, n étant le produit de :

- m masses M dudit giravion de référence

- q régimes de rotation R1 du rotor principal 3,

- r régimes de rotation R2 du rotor arrière 4,

b) à partir de cette série de mesures, on établit une première série de $n \times p$ diagrammes D1 représentant une série d'isoniveaux acoustiques L1, dans un système de coordonnées (TA, VZA), TA étant la vitesse air sur trajectoire et VZA la vitesse air verticale dudit giravion de référence,

c) on transforme cette première série de diagrammes D1 en une seconde série de $n \times p$ diagrammes D2 représentant une série d'isoniveaux acoustiques L2 dans le système de coordonnées (TA, VZA) en effectuant :

- d'une part, une correction de bruit CV représentative d'une nuisance acoustique qui dépend de sa durée d'application,

- d'autre part, une correction CMA pour corriger chaque masse M en une masse apparente MA du giravion de référence qui résulte des conditions d'atmosphère à l'altitude du vol,

d) on sélectionne dans chaque diagramme D2 la courbe d'isoniveau acoustique L2P correspondant à un niveau de bruit maximal admissible BMA,

e) on établit pour chaque masse apparente MA, l'enveloppe des courbes L2P dans le système de coordonnées (TA, VZA) ce qui détermine m domaines de vol DV, pour lesquels le bruit est inférieur audit bruit maximal admissible BMA,

f) on sélectionne, dans chaque domaine de vol DV, un domaine de fonctionnement DF ce qui détermine un ensemble de m domaines de fonctionnement du giravion de référence.

L'étape ultérieure d'exploitation des résultats établis lors de l'étape préliminaire concerne chaque giravion 1 du type particulier de giravion pour lequel:

a) on calcule la masse équivalente instantanée ME dudit giravion 1,

b) on détermine le point F de fonctionnement sans vent et le domaine de fonctionnement instantané DF1 dudit giravion 1 pour ladite masse apparente instantanée ME à partir de l'ensemble des m domaines de fonctionnement du giravion de référence.

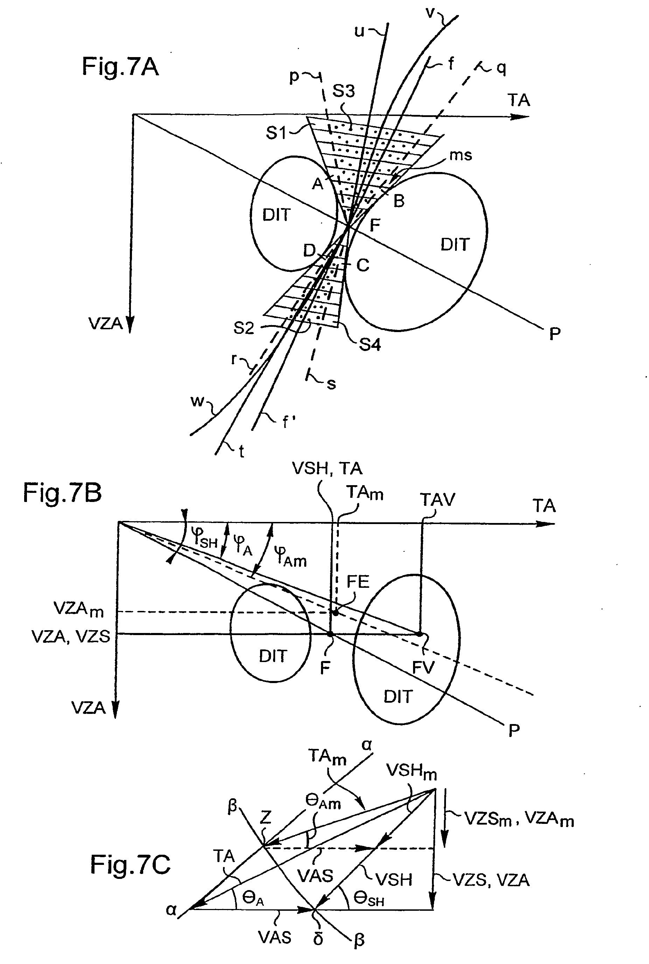

Dans l'étape préliminaire, on établit une première série de diagrammes, du type du diagramme D1 schématisé sur la figure 6, ces diagrammes représentant des courbes d'isoniveaux L1 établies dans un système de coordonnées (TA, VZA) à partir des mesures acoustiques relatives à un capteur C, par exemple un microphone disposé sur le giravion de référence.
Bien entendu, le domaine à l'extérieur d'une courbe d'isoniveau fermée, par exemple, diminue lorsque le niveau acoustique augmente.
De façon connue, chaque niveau acoustique peut être exploité suivant les principaux modes suivants :

- soit en niveau RMS (« Root Mean Square » en anglais pour racine de la moyenne quadratique),

- soit en niveau PIC (valeur maximale),

- soit en niveau PIC/RMS,

- soit en niveau pondéré.

Pour ce faire, les capteurs C sont disposés sur le giravion de référence, de façon avantageuse, du côté de la pale avançante pour favoriser l'étude des surbruits de compressibilité et BVI. Pour des études de bruit BVI en virage (à gauche ou à droite), il faut placer des capteurs C des deux côtés de l'hélicoptère.
A cet effet, on disposera lesdits capteurs C, de préférence :

a) du côté du fuselage 2 du giravion 1 correspondant au côté de la pale avançante

- dans une première zone N1, à l'avant du fuselage 2,

- dans une seconde zone N2, légèrement en avant dudit rotor principal 3,

- dans une troisième zone N3, en arrière dudit rotor principal 3,

b) à chacune des extrémités de l'empennage horizontal 12.

Il faut remarquer que le positionnement des capteurs C à chacune des extrémités de l'empennage horizontal 12 correspond, en principe, à la solution retenue pour un hélicoptère équipé d'un rotor arrière anticouple 4 de type rotor arrière caréné. Dans le cas où le rotor arrière anticouple 4 n'est pas caréné, on dispose généralement les capteurs C de façon identique dans les zones (N1, N2, N3) ainsi que sur une perche située dans le plan du rotor arrière anticouple.
On notera que l'on peut également compléter l'installation par la mise en place de capteurs additionnels disposés dans des zones (M1, M2, M3) respectivement symétriques des zones (N1, N2, N3) par rapport au plan de symétrie longitudinal du giravion de référence.
Par conséquent, on obtiendra de la sorte nxp diagrammes D1 correspondants à :

- p capteurs

- n configurations du giravion de référence comprenant :

  • m masses M dudit giravion de référence,

- q régimes de rotation R1 du rotor principal 3,

- r régimes de rotation R2 du rotor arrière 4.

Les nombres m, q, r peuvent être égaux à l'unité, mais sont fixés préférentiellement à trois pour chacun d'entre eux.

A partir de la première série de diagrammes D1, on établit une seconde série de diagrammes corrigés D2 de façon à déformer les courbes d'isoniveaux L1 de chaque diagramme D1 en des courbes d'isoniveaux L2 par une correction de bruit CV et une correction de masse apparente CMA.

La correction de bruit CV prend en compte le fait qu'une faible vitesse du giravion entraîne une durée plus importante de la nuisance acoustique. Pour tenir compte des effets physiologiques, entérinés par les normes, on introduit une pénalité acoustique de la forme 10log(V/TA) où V désigne une vitesse de référence du giravion. De façon avantageuse, cette vitesse V de référence désigne la vitesse de survol VS en palier à moindre bruit ou toute autre condition de vol choisie comme référence, par exemple une montée à la vitesse maximale de montée VY.

La correction de masse apparente CMA, introduite en raison de l'influence de la masse du giravion sur le niveau de bruit émis, consiste à faire correspondre chaque diagramme D1 à chaque masse apparente MA égale à M/($\rho/\rho o$) où $\rho l\rho o$ représente la masse volumique relative de l'air à l'altitude du vol, et non à chaque M initiale.

Dans chaque diagramme corrigé D2, on sélectionne alors la courbe d'isoniveau acoustique L2P pour laquelle le niveau de bruit est égal à un niveau de bruit maximal BMA, délimitant ainsi un domaine interne à exclure dans la procédure de décollage et d'atterrissage à moindre bruit.

De préférence, le niveau de bruit maximal BMA est fixé au niveau du bruit de référence correspondant à un survol en palier à bruit minimal.

En superposant l'ensemble des courbes L2P pour chaque masse apparente (pxqxr courbes L2P pour chaque masse apparente), on obtient de ce fait une enveloppe des domaines DIT à exclure en raison d'un niveau de bruit supérieur au bruit maximal BMA. Le domaine restant détermine le domaine de vol autorisé DV. De la sorte, on obtient m domaines de vol DV autorisés, c'est-à-dire un domaine de vol pour chaque masse apparente.

De façon avantageuse, on détermine au dernier stade de l'étape préliminaire, un point de fonctionnement F et un domaine de fonctionnement DF pour chaque masse apparente. Le point de fonctionnement F et le domaine de fonctionnement DF sont contenus, bien entendu, à l'intérieur de chaque domaine de vol DV correspondant.

En pratique, le point de fonctionnement F est déterminé, préférentiellement, de façon à :

- correspondre aux conditions de descente ou de montée sans vent d'un giravion avec une pente $\theta_{SH}$ sensiblement constante par rapport au sol, dans la phase P3 ou phase de fonctionnement stabilisée,

  Compte tenu des explications précédentes relatives à la figure 3A, le point de fonctionnement F correspond aux conditions suivantes :

  - la vitesse air sur trajectoire TA est égale à la vitesse VSH du giravion par rapport au sol,

  - la vitesse air verticale VZA est égale à la composante verticale VZS de la vitesse VSH du giravion par rapport au sol.

    Dans ces conditions, la pente de la trajectoire du giravion est bien égale à $\theta_{SH}$.

    Pour respecter le maintien de cette pente de trajectoire $\theta_{SH}$ quelle que soit la masse apparente MA du giravion et permettre l'application d'une procédure unique de décollage et d'atterrissage, il convient en fait que le point de fonctionnement F reste inchangé dans chaque système de coordonnées (TA, VZA) et corresponde aux coordonnées TA = VSH et VZA =VZS.

- permettre l'application de la procédure d'atterrissage et de décollage à moindre bruit en présence de vent et par suite la détermination du domaine de fonctionnement DF correspondant.

  En effet, toute procédure à moindre bruit doit être applicable quel que soit le vent (bien entendu dans un domaine de vent raisonnable) de façon à pouvoir permettre, par exemple, l'atterrissage d'un giravion en un point précis.

Dans la pratique, les composantes horizontale et verticale du vent perturbent la trajectoire de sorte qu'une correction de la vitesse air sur trajectoire TA et de la vitesse verticale VZA est nécessaire pour que l'hélicoptère conserve toujours la même pente par rapport au sol et la trajectoire reste effectivement une droite dans la zone P3. Comme les perturbations introduites par le vent fluctuent avec le temps et avec l'altitude, il est donc nécessaire de corriger en permanence la trajectoire aérodynamique du giravion (déterminée par les composantes de sa vitesse air) pour compenser l'influence du vent.

On comprend aisément d'après la figure 7A (établie pour une masse apparente prédéfinie) que la liberté de choix de couples de points de fonctionnement (TA-VZA) permettant de compenser les évolutions moyennes du vent reste limitée. Pour ce faire, les couples de points (TA-VZA) doivent rester contenus dans un domaine de fonctionnement relativement étroit DF si l'on veut respecter une pente sol $\theta_{SH}$ acceptable (limite fixée à 10° environ pour le confort des passagers) et éviter des variations trop fortes des paramètres de pilotage.

De façon générale, le domaine de fonctionnement DF est déterminé principalement par les conditions suivantes:

- la position F du point de fonctionnement stabilisé sans vent,

- le contour des domaines exclus DIT,

- les marges de manoeuvrabilité en termes de vitesse air sur trajectoire TA et de vitesse air verticale VZA au voisinage des domaines exclus DIT pour permettre de compenser les déséquilibres du giravion et surtout les variations du vent sans pénétrer dans les domaines exclus DIT,

- la capacité à respecter le critère acoustique retenu dans la plus large gamme de vent possible.

Dans la pratique, un domaine de fonctionnement DF est établi, conformément à la figure 7A comme suit :

- dans une première étape, on délimite deux secteurs angulaires (S1, S2) tangents aux domaines exclus DIT en quatre points (A, B, C, D), le sommet commun de ces secteurs angulaires étant le point F de fonctionnement sans vent : ces deux secteurs angulaires (S1, S2) sont représentés sous forme de hachures sur la figure 7A,

- pour introduire les marges de sécurité (manoeuvrabilité, ...), on définit, dans une deuxième étape, le domaine de fonctionnement DF sous la forme de deux secteurs angulaires (S3, S4), les secteurs angulaires S3 et S4 (représentés sur la figure 7A par une zone en pointillés) étant inclus respectivement dans les secteurs S1 et S2 et délimités respectivement par les droites (Fp, Fq) d'une part et (Fr, Fs) d'autre part de telle sorte que leurs distances par rapport aux points de tangence A, B, C, D soient égales à la marge de sécurité ms choisie.

On remarque que les secteurs angulaires (S3, S4), déterminant le domaine de fonctionnement DF pour une masse apparente MA prédéfinie du giravion, sont tels que le domaine de fonctionnement relatif au secteur angulaire S3 n'est pas nécessairement symétrique par rapport au domaine de fonctionnement relatif au secteur angulaire S4.

Chaque domaine de fonctionnement DF ainsi déterminé peut être encore assez vaste. Aussi, pour simplifier volontairement le pilotage et permettre le respect effectif de la procédure, on adopte, de préférence, une loi de pilotage qui relie linéairement deux composantes de la vitesse air. Selon la décomposition choisie, ces deux composantes peuvent être la vitesse air sur trajectoire TA, la vitesse air verticale VZA, et la pente $\theta_A$ par rapport à l'air. Le choix volontaire d'une loi de pilotage linéaire est matérialisé par le tracé d'une droite (fFf') dans le domaine DF précédemment défini sur la figure 7A, cette droite (fFf') passant par le point F de fonctionnement sans vent.

En fait, suivant la forme des secteurs angulaires S3 et S4, on peut avoir intérêt à remplacer la droite (fFf') par deux demi-droites Fu et Ft respectivement tracées dans les secteurs angulaires S3 et S4 (loi de pilotage uFt), voire par une courbe vFw particulièrement avantageuse en termes de pilotage, de confort et de sécurité.

Dans ces conditions, il importe de noter que :

- à chacun des points soit de la droite (fFf'), soit des demi-droites Ft et Fu, soit de la courbe vFw correspond une valeur particulière de la vitesse du vent : par conséquent, on impose au pilotage du giravion une contrainte supplémentaire, à savoir le respect des coordonnées instantanées TA (vitesse air sur trajectoire) ou VZA (vitesse air verticale) correspondant au point de fonctionnement instantané ou point de fonctionnement effectif FEF relatif soit à la droite (fFf'), soit à l'une des demi-droites Ft et Fu ou soit à la courbe vFw et ceci pour la valeur de la vitesse du vent instantané.

  On note que cette contrainte supplémentaire peut être une relation entre les deux « paramètres air » tels que TA et VZA par exemple (cas d'une pente constante, notamment) ou bien une valeur particulière imposée à l'un des « paramètres air », à savoir la constance de VZA par exemple.

- les lois de pilotage fFf', uFt et vFw tracées sur la figure 7A sont déterminées pour une masse apparente MA du giravion. Dans ces conditions, la variation de ces lois de pilotage avec la masse apparente permet l'obtention des conditions optimales en terme de niveau acoustique acceptable (inférieur au seuil fixé) relativement à chaque masse apparente. Cependant, et par raison de simplification, on peut envisager de retenir dans le cas général, qu'une seule loi de pilotage avec vent du type soit fFf', soit uFt ou soit vFw quelle que soit la masse apparente MA du giravion.

- de préférence, la situation dans les secteurs S3 ou S4 des points de fonctionnement avec vent respecte la condition selon laquelle la vitesse sol VSH du giravion diminue en présence d'un vent de face de façon à améliorer la sécurité de pilotage.

A titre d'illustration de l'effet du vent, et en se référant à nouveau à la figure 3B et aux commentaires correspondants, on prendra l'exemple d'un giravion en présence d'un vent de face.

Dans ce cas, le giravion suit toujours une trajectoire de pente $\theta_{SH}$ par rapport au sol, en se déplaçant à une vitesse VSH.

En absence de vent, la vitesse air sur trajectoire TA est égale à VSH, et le point de fonctionnement stabilisé F, sur la figure 7B, est à l'intersection de la droite d'abscisse VSH et de la ligne OP d'angle $\varphi_{SH}$ tel que tg $\varphi_{SH}$ = VZA / TA.

En présence d'un vent de face de vitesse VAS par rapport au sol, la vitesse air sur trajectoire TA est supérieure à la vitesse VSH comme indiqué sur la figure 3B et prend une valeur TAV comme mentionné sur la figure 7B.

Par ailleurs, la pente air $\theta_A$ est inférieure à la valeur $\theta_{SH}$ comme le montre la figure 3B de sorte que le point de fonctionnement FV avec vent (à l'intersection de la droite d'ordonnée VZA égale à celle du point F et de la droite issue du point O et de pente $\varphi A$ avec tg $\varphi_A$ = VZA/TAV peut se trouver à l'intérieur du domaine exclu DIT situé à droite du point F sur la figure 7B.

Pour remédier à cette situation et en référence à la figure 7C, il convient alors d'ajuster, par exemple, la vitesse air sur trajectoire à une valeur $TA_m$, différente de TAV, ce qui amène l'angle $\theta_A$ à une valeur $\theta_{Am}$ et l'angle $\varphi_A$ à une valeur $\varphi_{Am}$ d'après la figure 7B. Corrélativement, on constate que :

- la vitesse VSH prend la valeur VSHm,

- la vitesse VZS prend la valeur VZSm,

- la vitesse VZA prend la valeur VZAm.

Dans ces conditions, il se fait que :

$$\text{tg } \varphi_{Am} = VZAm \, / \, TAm$$

Par conséquent, ce processus détermine un point effectif de fonctionnement noté FE sur la figure 7B situé en dehors des domaines exclus DIT.

Dans ces conditions et pour chaque valeur de la vitesse d'un vent de face VAS, il y a autant de points possibles de fonctionnement FE que de valeurs de la vitesse air sur trajectoire retenue TAm ou de valeur de l'angle $\theta_{Am}$. L'ensemble de ces points FE, pour un vent de face de vitesse VAS est représenté par une courbe dont l'équation prend l'une des formes suivantes :

$$VZAm^2 + \left( \frac{VZAm}{tg(\theta_{SH})} + VAS \right)^2 = TAm^2$$

$$TAm \times \cos(\theta_{Am}) - VAS \quad = TAm \times \sin(\theta_{Am}) / tg(\theta_{SH})$$

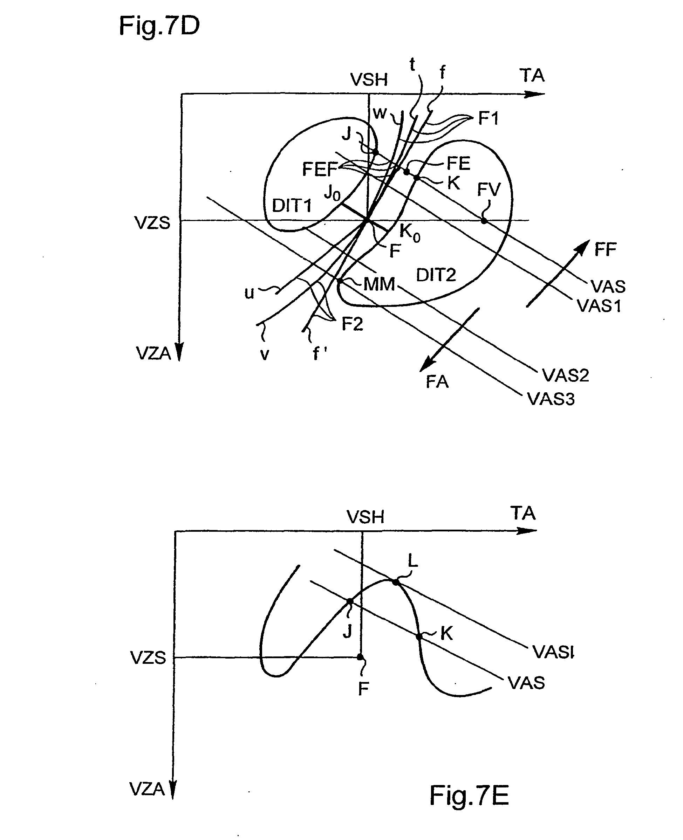

On a porté sur la figure 7D deux portions d'une telle courbe relatives à deux vitesses VAS et VAS1 d'un vent de face, l'influence d'un vent de face croissant étant schématisée par la flèche FF.

De façon semblable, les deux portions de courbe, repérées par les notations VAS2 et VAS3 sur la figure 7D, sont représentatives de vents arrière de vitesses VAS2 et VAS3, la vitesse de ce vent arrière étant croissante selon le sens de la flèche FA.

En général, chacune de ces courbes (VAS, VAS1, VAS2 VAS3,...) comporte une partie située dans le domaine autorisé, c'est-à-dire entre les domaines exclus DIT1 et DIT2 par exemple, en référence à la figure 7D. Ainsi, le segment de courbe JK relatif au vent de face de vitesse VAS correspond aux solutions possibles pour ce vent. Les points FE se situent donc sur ce segment JK. Un tel segment JK est sensiblement linéaire lorsque les angles précités restent relativement faibles.

Toutefois, on doit remarquer d'une part que le segment JK peut éventuellement être réduit à un seul point L auquel cas ce point L représente la vitesse de vent limite VASL acceptable comme illustré par la figure 7E ou encore, d'autre part, que le segment JK est par exemple borné à une seule extrémité désignée par exemple par le point MM de la figure 7D pour la vitesse de vent VAS3.

En référence à la figure 7D et des explications précédentes, on comprend que pour la vitesse de vent VAS par exemple, le point de fonctionnement effectif FEF appartient :

- d'une part au segment JK,
- d'autre part, à l'un des secteurs angulaires S3 ou S4 précédemment décrits et plus particulièrement selon une loi de pilotage avec vent :

  • soit du type fFf' ; une seule droite passant par le point F de fonctionnement sans vent,

  • soit du type uFt : deux demi-droites issues du point F,

  • soit du type vFw : une courbe continue.

Dans ce cas, il en résulte que pour chaque vitesse de vent VAS, le point de fonctionnement effectif FEF est unique. Ce point FEF est à l'intersection du segment JK et de l'une des lois de pilotage avec vent retenue (fFf' ou uFt ou vFw). La figure 7D montre les positions du point FEF pour chacune des lois de pilotage fFf', uFt et vFw pour le vent de face VAS.

On rappelle que le point de fonctionnement F sans vent doit être commun, si possible, à toutes les masses apparentes MA du giravion de façon à définir qu'une seule procédure «sol» de montée ou de descente du giravion. Par contre, les secteurs angulaires S3 et S4 d'une part et les lois de pilotage (fFf', uFt ou vFw) peuvent varier en fonction des variations de la masse apparente MA.

D'une façon générale, on applique le même processus pour toutes combinaisons de vent (horizontal et/ou vertical) de façon à placer le point de fonctionnement effectif FEF en dehors des domaines exclus DIT.

Par conséquent, on comprend que pour remédier aux différents cas de vent (de face, arrière, ascendant ou descendant), le point de fonctionnement effectif FEF se déplace de préférence selon les lois de pilotage fFf' ou uFt ou vFw en général bornées entre des points limites F1 et F2 (figure 7D).

En référence à la figure 7D par exemple, on comprend également que le maximum de robustesse obtenu par la présente invention correspond au choix d'une part du point F de fonctionnement sans vent au milieu du segment $J_0K_0$ (relatif à un vent de vitesse nulle) et d'autre part à tout point de fonctionnement effectif FEF avec vent, situé au milieu de chaque segment JK, ce qui correspond de ce fait à une courbe vFw particulière et optimale, en étant équidistante des domaines dans lesquels le bruit est supérieur au bruit maximal admissible BMA, ce qui détermine une loi de pilotage optimale vFw avec vent. Bien entendu, la courbe vFw n'est pas dans ce cas nécessairement contenue dans les secteurs angulaires (S3, S4). De façon avantageuse, cette courbe vFw est indépendante de la masse apparente MA d'un giravion 1 du type particulier de giravion.

Dans le cadre des phases de vol P2 et P4, indiquées sur la figure 2, on détermine également, de façon automatique, le point F de fonctionnement sans vent et la succession des points FEF de fonctionnement effectif avec vent et de domaines de fonctionnement DF à partir des domaines de vol précédents DV.

L'étape ultérieure est réalisée à chaque procédure d'atterrissage et de décollage d'un giravion 1 du type particulier de giravion.

A cet effet, on effectue les opérations successives suivantes:

a) on calcule la masse équivalente instantanée ME du giravion 1,
b) on détermine un domaine de fonctionnement instantané DF1 du giravion 1 pour ladite masse apparente instantanée ME à partir de l'ensemble des m domaines de fonctionnement dudit giravion de référence.

La masse équivalente instantanée ME est égale au produit de la masse instantanée du giravion 1 (ajustée instantanément grâce à la consommation du carburant indiquée par la jauge 9), par l'accélération verticale $\gamma_z$ à laquelle il est soumis.

Le domaine DF1 peut être obtenu par une quelconque méthode numérique, par exemple une interpolation à partir des domaines DF précédents.

Bien entendu, les lois de pilotage fFf', uFt et vFw précédemment décrites sont également appliquées audit giravion 1 et par suite intégrées dans chaque diagramme de fonctionnement instantané DF1 à l'aide des interpolations effectuées à partir du tracé de ces lois dans les diagrammes de fonctionnement DF.

De façon avantageuse, les lois de pilotages fFf', uFt et vFw peuvent être indépendantes de la masse équivalente ME du giravion 1 du type particulier de giravion.

Par ailleurs et dans un but de généralisation, il importe de remarquer qu'en référence à la figure 3D, relative à l'influence d'un vent quelconque dont la vitesse VAS comprend une composante horizontale VHAS et une composante verticale VZAS, l'équilibre du giravion est régi, quelle que soit la phase de vol, par la relation $R_1$ suivante:

$$TA \times \sin(\theta_{SH} - \theta_A) = VZAS \times \cos(\theta_{SH}) - VHAS \times \sin\theta_{SH}$$

obtenue par une projection de vecteurs sur un axe normal à la vitesse VSH du giravion par rapport au sol.

Par conséquent, on constate que cette relation d'équilibre relie, pour un vent VAS de composantes VHAS et VZAS, les trois paramètres caractéristiques du giravion à savoir la vitesse air sur trajectoire TA et les angles $\theta_{SH}$ et $\theta_A$ relatifs respectivement à la pente de la trajectoire du giravion par rapport au sol et à la pente de la vitesse air sur trajectoire TA par rapport au sol.

Comme exposé précédemment, la contrainte de moindre bruit se traduit par une relation $R_2$ ou contrainte de pilotage qui relie deux « paramètres air » parmi les trois « paramètres air » TA, VZA et $\theta_A$, par exemple sous l'une des formes équivalentes suivantes :

$$TA = R_2(\theta_A)$$

$$TA = R_2(VZA)$$

$$VZA = R_2(\theta_A)$$

Il s'agit précisément du principe des lois de pilotage fFf', uFt et vFw. En effet, on comprend aisément, à titre illustratif, que les lignes fFf', uFt et la courbe vFw représentent bien une relation entre les paramètres TA et VZA sous la forme $TA = R_2(VZA)$.

L'obtention d'une solution unique représentée par un point de fonctionnement effectif FEF nécessite la prise en compte d'une relation supplémentaire $R_3$ correspondant à une contrainte opérationnelle.

Dans le cas particulier de la phase d'atterrissage P3, cette relation $R_3$ impose de conserver la pente de la trajectoire du giravion $\theta_{SH}$ constante dans la mesure où l'on exige un atterrissage d'un giravion 1 en un point précis, conformément aux explications déjà fournies.

Selon une variante relative notamment au décollage d'un giravion 1, la contrainte opérationnelle peut correspondre, éventuellement, au choix d'une fonction de performance maximale de montée en fonction de la vitesse du giravion, de sorte que la relation $R_3$ prend la forme:

$$VZA = R_3(TA)$$

Cette relation est équivalente à une relation $R_2$. Cependant, il n'existe qu'un unique point de fonctionnement effectif FEF car la pente de la trajectoire $\theta_{SH}$ du giravion est alors totalement déterminée par les équations de la mécanique du vol.

Selon une autre variante relative notamment à un survol d'un giravion 1 en palier accéléré ou décéléré, la contrainte opérationnelle peut être écrite sous la forme d'une relation R₃ telle que la vitesse sur trajectoire TA est une fonction du temps t, à savoir par exemple :

$$TA = R_3(t)$$

Alors, la relation $R_3(t)$ est avantageusement telle que:

$$R_3(t) = a + \gamma\, t$$

où a est une constante et Y l'accélération ou la décélération du giravion.

Dans ce dernier cas, on note qu'il n'existe encore qu'un seul point de fonctionnement effectif FEF puisque la pente $\theta_{SH}$ est nulle par définition.

A titre illustratif et en référence à la figure 7C, on constate que pour un vent de vitesse VAS, l'ensemble des solutions sans contrainte de pilotage correspond à la droite $\alpha\alpha$. La solution unique déterminant un seul point de fonctionnement effectif FEF en présence du vent de vitesse VAS est alors le point Z à l'intersection de la droite $\alpha\alpha$ et d'une courbe $\beta\beta$ passant par le point $\delta$ tel que défini sur la figure 7C. Le point Z est l'image dans la figure 7C de l'un des points de fonctionnement effectif FEF de la figure 7D.

Bien entendu, le procédé conforme à l'invention peut être mis en oeuvre sur tout type de giravion, par exemple les hélicoptères, les combinés et les convertibles.

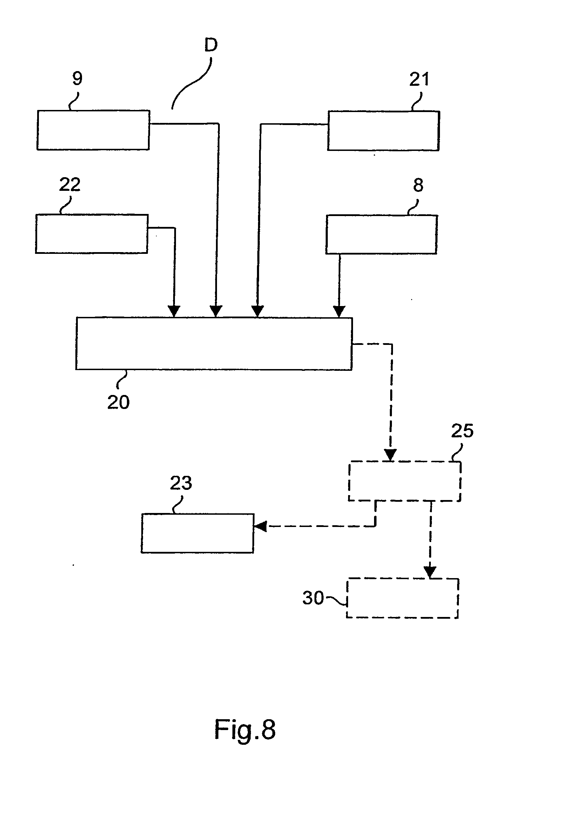

Le dispositif conforme à l'invention et représenté schématiquement sur la figure 8 est destiné à gérer le vol dudit giravion 1 du type particulier de giravion de façon à minimiser le bruit émis lors des phases de décollage et d'atterrissage.

A cet effet, ce dispositif D comporte essentiellement :

- un calculateur 20 équipé d'une mémoire 21 contenant les domaines de fonctionnement avec vent préétablis DF pour ledit giravion de référence, ledit calculateur 20 étant susceptible de déterminer automatiquement le point F de fonctionnement sans vent et le domaine de fonctionnement avec vent DF1 correspondant à la masse équivalente instantanée ME dudit giravion 1,

- un variomètre et un équipement anémo-barométrique 8 pour acquérir les valeurs de la vitesse air sur trajectoire TA et de la vitesse air verticale VZA dudit giravion 1,

- un récepteur 22 pour déterminer la vitesse sol et la position dans l'espace dudit giravion 1,

- un moyen de visualisation 23 des consignes de pilotage élaborées par ledit calculateur 20,

- au moins une jauge de carburant 9 pour déterminer la masse instantanée dudit giravion 1.

Par ailleurs, la mémoire 21 peut contenir de façon avantageuse :

- la loi linéaire de pilotage avec vent fFf', située dans un double secteur angulaire (S3, S4),

- la loi de pilotage avec vent uFt constituée de deux demi-droites Fu et Ft situées respectivement dans les secteurs angulaires S3 et S4,

- la loi de pilotage avec vent vFw constituée par deux portions de courbes vF et wF situées respectivement dans les secteurs angulaires S3 et S4,

- la loi de pilotage avec vent vFw constituée par une courbe équidistante des domaines dans lesquels le bruit est supérieur au bruit maximal admissible BMA.

**EP 1 730 032 B1**

A noter que chacune des lois de pilotage fFf', uFt, vFw peut être indépendante de la masse équivalente ME du giravion 1, de même que les domaines de fonctionnement DF et DF1.

De façon avantageuse, ladite mémoire 21 contient une contrainte opérationnelle qui correspond à une pente de trajectoire $\theta_{SH}$ constante d'un giravion 1 du type particulier de giravion.

Dans une variante, ladite mémoire 21 contient une contrainte opérationnelle qui correspond à la fonction de performance maximale de montée.

Dans une autre variante, ladite mémoire 21 contient une contrainte opérationnelle qui correspond à une relation représentant la vitesse sur trajectoire TA en fonction du temps et qui s'applique notamment dans les phases de survol en palier accéléré ou décéléré.

Le récepteur 22 peut être un récepteur GPS ou tout autre dispositif équivalent.

Dans le cadre de la présente invention, ledit dispositif D permet l'élaboration et le suivi des consignes de pilotage à moindre bruit et peut respecter le maintien du giravion 1 sur une trajectoire de pente $\theta_{SH}$ sensiblement constante par rapport au sol, quelles que soient la masse dudit giravion et les conditions environnantes (vent, ...). Dans ces conditions, on convient encore de désigner la phase P3 par les termes «phase stabilisée», «phase de fonctionnement stabilisé» ou encore «phase de montée et de descente stabilisée».

De façon avantageuse, le dispositif conforme à l'invention permet également le maintien de performances maximales de montée ou de survol en palier accéléré ou décéléré en minimisant le bruit émis par un giravion 1 du type particulier de giravion.

A cet effet, la gestion d'une procédure à moindre bruit selon l'invention comporte trois étapes, l'enchaînement de ces étapes étant répété au rythme des paramètres d'entrée.

La première étape concerne le positionnement de la trajectoire à moindre bruit, par exemple lors d'un atterrissage, en l'absence de vent sur le site d'atterrissage.

La trajectoire préétablie suivant la figure 2 et mémorisée dans la mémoire 21 comporte deux éléments variables :

- la longueur de la pente (zone P3), qui dépend de la hauteur du palier,

- la longueur du palier décéléré (zone P1), qui dépend de la vitesse optimale du survol préalable à moindre bruit et des contraintes d'environnement.

Le calculateur 20 a donc pour fonction initiale d'adapter la valeur de ces deux paramètres au cas présent, à partir des données fournies par les différents moyens de la figure 8 à savoir notamment :

- au moins une jauge de carburant 9 pour déterminer la masse instantanée dudit giravion 1,

- un récepteur 22 pour déterminer la vitesse dudit giravion par rapport au sol et sa position dans l'espace.

Pour compenser l'influence du vent, le calculateur 20 élabore dans une seconde étape en continu les corrections de la vitesse air sur trajectoire TA et de la vitesse air verticale VZA nécessaires pour conserver sensiblement constante la pente dans la zone P3 ou encore respecter le maintien des performances maximales de montée ou de survol en palier accéléré ou décéléré. Les corrections sont effectuées à partir de la vitesse par rapport au sol indiquée par le système 22 et la vitesse air sur trajectoire TA fournie par le variomètre et l'équipement anémo-barométrique 8.

A l'issue de cette seconde étape, le calculateur fournit donc les paramètres de pilotage correspondant à la trajectoire corrigée en fonction du vent.

Pour permettre la réalisation effective du point de vol ainsi calculé, le calculateur 20 doit, dans une troisième étape, à chaque instant transmettre les consignes de pilotage au pilote ou à un pilote automatique 25 avec visualisation de ces consignes grâce à un écran de visualisation 23 pour permettre la reprise en main par le pilote en cas de défaillance du pilote automatique.

Lorsqu'un pilote automatique 25 est utilisé, les signaux de commande sont transmis aux commandes de vol 30 pour actionner les gouvernes dudit giravions 1.

Ainsi, grâce à l'invention, on notera que les mesures acoustiques effectuées avantageusement au niveau dudit giravion 1 sont à peu près indépendantes du vent. De plus, elles ne sont effectuées qu'une seule fois avant la mise en service opérationnelle de chaque giravion d'un type particulier de giravion.

En suivant des trajectoires préétablies de façon précise et réaliste, tenant compte des paramètres les plus influents, et en appliquant des corrections de trajectoires en fonction du vent mesuré, les nuisances sonores sont ainsi minimisées sans avoir recours à des installations spécifiques au sol.

Bien entendu, le dispositif conforme à l'invention peut équiper tout type de giravion, par exemple les hélicoptères, les combinés et les convertibles.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé pour minimiser le bruit émis pendant le décollage et l'atterrissage d'un giravion (1) d'un type particulier de giravion, où, dans une étape de vols préliminaires, dans laquelle on utilise un giravion de référence correspondant à un giravion (1) dudit type particulier :

   a) on fait une série de mesures sur le giravion de référence, en mesurant lors de vols préliminaires, les valeurs d'une pluralité de niveaux acoustiques détectés par une pluralité de p capteurs C fixés à ce giravion de référence et représentatifs de l'émission acoustique pour n configurations du giravion de référence, déterminées par:

   - m masses M dudit giravion de référence,
   - q régimes de rotation R1 du rotor principal (3),
   - r régimes de rotation R2 du rotor arrière (4),

   b) à partir de cette série de mesures, on établit une première série de n$\times$p diagrammes D1 représentant une série d'isoniveaux acoustiques L1, dans un système de coordonnées (TA, VZA), TA étant la vitesse air sur trajectoire et VZA la vitesse air verticale dudit giravion de référence,
   c) on transforme cette première série de diagrammes D1 en une seconde série de n$\times$p diagrammes D2 représentant une série d'isoniveaux acoustiques L2 dans le système de coordonnées (TA, VZA) en effectuant :

   - d'une part, une correction de bruit CV représentative d'une nuisance acoustique qui dépend de sa durée d'application,
   - d'autre part, une correction CMA pour corriger chaque masse M en masse apparente MA du giravion de référence qui résulte des conditions d'atmosphère à l'altitude du vol,

   d) on sélectionne dans chaque diagramme D2 la courbe d'isoniveau acoustique L2P correspondant à un niveau de bruit maximal admissible BMA,
   e) on établit pour chaque masse apparente MA, l'enveloppe des courbes L2P dans le système de coordonnées (TA, VZA) ce qui détermine m domaines de vol DV, pour lesquels le bruit est inférieur audit bruit maximal admissible BMA,
   f) on sélectionne, dans chaque domaine de vol DV, un domaine de fonctionnement DF ce qui détermine un ensemble de m domaines de fonctionnement du giravion de référence.

2. Procédé selon la revendication 1,
   **caractérisé en ce que** la correction CMA consiste à calculer une masse apparente MA égale à M/($\rho$/$\rho$o) où $\rho$/$\rho$o exprime la masse volumique relative de l'air à l'altitude de vol,

3. Procédé selon la revendication 1,
   **caractérisé en ce que** la correction de vitesse CV correspond à une pénalité acoustique de la forme 10 log (V/TA) où V désigne une vitesse de référence dudit giravion (1).

4. Procédé selon la revendication 3,
   **caractérisé en ce que** ladite vitesse de référence V est la vitesse de survol VS en palier à moindre bruit du giravion (1).

5. Procédé selon la revendication 3,
   **caractérisé en ce que** ladite vitesse de référence V est la vitesse maximale de montée VY du giravion (1).

6. Procédé selon l'une quelconque des revendications 1 à 5,
   **caractérisé en ce que** pour chaque étape ultérieure relative au décollage et à l'atterrissage d'un giravion (1) du type particulier de giravion :

   a) on calcule la masse équivalente instantanée ME du giravion (1),

b) on détermine le point F de fonctionnement sans vent et le domaine de fonctionnement instantané avec vent DF1 du giravion (1) pour ladite masse équivalente instantanée ME à partir de l'ensemble des m domaines de fonctionnement du giravion de référence.

7. Procédé selon la revendication 6,
**caractérisé en ce que** lesdits domaines de fonctionnement DF et DF1 sont un double secteur angulaire (S3, S4), chacun de ces secteurs angulaires ayant pour sommet le point F de fonctionnement sans vent et présentant une marge de sécurité ms respectivement par rapport à deux secteurs angulaires (S1, S2) issus du point F de fonctionnement sans vent.

8. Procédé selon la revendication 7,
**caractérisé en ce que** le point F de fonctionnement sans vent est indépendant de la masse équivalente ME d'un giravion (1) du type particulier de giravion.

9. Procédé selon l'une quelconque des revendications 7 et 8,
**caractérisé en ce que** les points de fonctionnement effectif avec vent FEF sont situés sur une droite fFf' passant par le point F de fonctionnement sans vent, la droite fFf' étant contenue dans le double secteur (S3, S4) ce qui détermine une loi de pilotage fFf' avec vent.

10. Procédé selon l'une quelconque des revendications 7 et 8,
**caractérisé en ce que** les points de fonctionnement effectif avec vent FEF sont situés sur deux demi-droites, Fu et Ft, chacune de ces deux demi-droites passant par le point F de fonctionnement sans vent et étant respectivement contenue dans les secteurs angulaires S3 et S4 ce qui détermine une loi de pilotage uFt avec vent.

11. Procédé selon l'une quelconque des revendications 7 et 8,
**caractérisé en ce que** les points de fonctionnement effectif avec vent FEF sont situés sur une courbe vFw passant par le point F de fonctionnement sans vent, les portions de courbe vF et wF étant respectivement contenues sans les secteurs S3 et S4 ce qui détermine une loi de pilotage vFw avec vent.

12. Procédé selon la revendication 9,
**caractérisé en ce que** la loi de pilotage fFf' est indépendante de la masse équivalente ME d'un giravion (1) du type particulier de giravion.

13. Procédé selon la revendication 10,
**caractérisé en ce que** la loi de pilotage uFt est indépendante de la masse équivalente ME d'un giravion (1) du type particulier de giravion.

14. Procédé selon la revendication 11,
**caractérisé en ce que** la loi de pilotage vFw est indépendante de la masse équivalente ME d'un giravion (1) du type particulier de giravion.

15. Procédé selon la revendication 6,
**caractérisé en ce que** les points de fonctionnement effectif avec vent FEF sont situés sur une courbe de pilotage avec vent vFw passant par le point F de fonctionnement sans vent, cette courbe vFw étant équidistante des domaines dans lesquels le bruit est supérieur au bruit maximal admissible BMA.

16. Procédé selon la revendication 15,
**caractérisé en ce que** la loi de pilotage vFw est indépendante de la masse équivalente ME d'un giravion (1) du type particulier de giravion.

17. Procédé selon l'une quelconque des revendications 9 à 16, ,
**caractérisé en ce qu'**on détermine une contrainte opérationnelle qui correspond à une pente de trajectoire $\theta_{SH}$ constante d'un giravion (1) du type particulier de giravion.

18. Procédé selon l'une quelconque des revendications 10 et 16,
**caractérisé en ce qu'**on détermine une contrainte opérationnelle qui correspond à la fonction de performance maximale de montée.

**19.** Procédé selon l'une quelconque des revendications 10 à 16,
**caractérisé en ce qu'**on détermine une contrainte opérationnelle qui correspond à une relation représentant la vitesse sur trajectoire TA en fonction du temps.

**20.** Procédé selon l'une quelconque des revendications 1 à 19,
**caractérisé en ce que** ladite pluralité de niveaux acoustiques comporte au moins les niveaux acoustiques suivants dont on mesure les valeurs par des capteurs C disposés :

a) du côté du fuselage (2) du giravion de référence correspondant au côté de la pale avançante :

- dans une première zone N1, à l'avant du fuselage (2),
- dans une seconde zone N2, légèrement en avant du rotor principal (3) dudit giravion (1),
- dans une troisième zone N3, en arrière dudit rotor principal (3),

b) à chacune des extrémités de l'empennage horizontal (12) dudit giravion de référence.

**21.** Procédé selon l'une quelconque des revendications 1 à 19,
**caractérisé en ce que** ladite pluralité de niveaux acoustiques comporte au moins les niveaux acoustiques suivants dont on mesure les valeurs par des capteurs C disposés :

a) du côté du fuselage (2) du giravion de référence correspondant au côté de la pale avançant :

- dans une première zone N 1, à l'avant du fuselage (2),
- dans une seconde zone N2, légèrement en avant du rotor principal (3) dudit giravion (1),
- dans une troisième zone N3, en arrière dudit rotor principal (3),

b) sur une perche située dans le plan du rotor arrière (4).

**22.** Procédé selon l'une quelconque des revendications 20 et 21,
**caractérisé en ce que** la pluralité de niveaux acoustiques comporte en complément les niveaux acoustiques qui sont mesurés dans des zones M1, M2 et M3 respectivement symétriques des zones N1, N2 et N3 par rapport au plan de symétrie longitudinal dudit giravion de référence.

**23.** Procédé selon l'une quelconque des revendications 20 à 22,
**caractérisé en ce que** lesdites zones N1,N2,N3,M1,M2,M3 sont situées à l'extérieur dudit fuselage (2) dudit giravion de référence.

**24.** Procédé selon l'une quelconque des revendications 20 à 22,
**caractérisé en ce que** lesdites zones N1,N2,N3,M1,M2,M3 sont situées à l'intérieur dudit fuselage (2) dudit giravion de référence.

**25.** Procédé selon l'une quelconque des revendications 1 à 24,
**caractérisé en ce que** ledit nombre n de configurations dudit giravion de référence comprend :

- au moins une masse M, correspondant à m=1,
- au moins un régime de rotation R1 du rotor principal (3) correspondant à q=1.

**26.** Procédé selon l'une quelconque des revendications 1 à 24,
**caractérisé en ce que** ledit nombre n de configurations dudit giravion de référence comprend :

- trois masses M correspondant à m=3,
- trois régimes de rotation R1 du rotor principal (3) correspondant à q=3.

**27.** Procédé selon l'une quelconque des revendications 1 à 24,
**caractérisé en ce que** ledit nombre n de configurations dudit giravion de référence comprend :

- trois masses M, correspondant à m=3,
- trois régimes de rotation R1 du rotor principal (3) correspondant à q=3,

- trois régimes de rotation R2 du rotor arrière (4) correspondant à r=3.

**28.** Procédé selon l'une des revendications 1 à 27,
**caractérisé en ce que** ledit niveau de bruit maximal BMA correspond au niveau de bruit minimal en vol en palier à vitesse nominale dudit giravion (1).

**29.** Procédé selon l'une quelconque des revendications 1 à 28,
**caractérisé en ce que** lesdits capteurs C sont des microphones.

**30.** Procédé selon l'une quelconque des revendications 1 à 29,
**caractérisé en ce qu'**il est mis en oeuvre pour un giravion (1) du type hélicoptère.

**31.** Procédé selon l'une quelconque des revendications 1 à 29,
**caractérisé en ce qu'**il est mis en oeuvre pour un giravion (1) du type combiné.

**32.** Procédé selon l'une quelconque des revendications 1 à 29,
**caractérisé en ce qu'**il est mis en oeuvre pour un giravion (1) du type convertible.

**33.** Dispositif pour la mise en oeuvre du procédé spécifié sous l'une des revendications 1 à 32, comportant:

- un calculateur (20) équipé d'une mémoire (21) contenant les domaines de fonctionnement avec vent préétablis DF pour ledit giravion de référence, ledit calculateur (20) étant susceptible de déterminer automatiquement le point F de fonctionnement sans vent et le domaine de fonctionnement avec vent DF1 correspondant à la masse équivalente instantanée ME dudit giravion (1) du type particulier de giravion,
- un variomètre et un équipement anémo-barométrique (8) pour acquérir les valeurs de la vitesse air sur trajectoire TA et de la vitesse air verticale VZA dudit giravion (1),
- un récepteur (22) pour déterminer la vitesse sol et la position dans l'espace dudit giravion (1),
- un moyen de visualisation (23) des consignes de pilotage élaborées par ledit calculateur (20) ;
- au moins une jauge de carburant (9) pour déterminer la masse instantanée dudit giravion (1).

**34.** Dispositif selon la revendication 33,
**caractérisé en ce que** ladite mémoire (21) contient une loi linéaire de pilotage avec vent fFf' située dans un double secteur angulaire (S3, S4) déterminé dans le domaine de fonctionnement avec vent DF1.

**35.** Dispositif selon la revendication 33,
**caractérisé en ce que** ladite mémoire (21) contient une loi linéaire de pilotage avec vent uFt constituée de deux demi-droites Fu et Ft situées respectivement dans les secteurs angulaires S3 et S4 déterminés dans le domaine de fonctionnement avec vent DF1.

**36.** Dispositif selon la revendication 33,
**caractérisé en ce que** ladite mémoire (21) contient une loi de pilotage avec vent vFw constituée par deux portions de courbe vF et wF situées respectivement dans les secteurs angulaires S3 et S4 déterminés dans le domaine de fonctionnement avec vent DF1.

**37.** Dispositif selon la revendication 33,
**caractérisé en ce que** ladite mémoire (21) contient une loi de pilotage avec vent vFw déterminée dans le domaine de fonctionnement DF1 et constituée par une courbe équidistante des domaines dans lesquels le bruit est supérieur au bruit maximal admissible BMA.

**38.** Dispositif selon la revendication 34,
**caractérisé en ce que** la loi de pilotage fFf' est indépendante de la masse équivalente ME d'un giravion (1) du type particulier de giravion.

**39.** Dispositif selon la revendication 35,
**caractérisé en ce que** la loi de pilotage uFt est indépendante de la masse équivalente ME du giravion (1) du type particulier de giravion.

**40.** Dispositif selon la revendication 36,

**caractérisé en ce que** la loi de pilotage vFw est indépendante de la masse équivalente ME du giravion (1) du type particulier de giravion.

41. Dispositif selon la revendication 37,
**caractérisé en ce que** la loi de pilotage vFw est indépendante de la masse équivalente ME du giravion (1) du type particulier de giravion.

42. Dispositif selon l'une quelconque des revendications 33 à 41,
**caractérisé en ce que** ladite mémoire (21) contient une contrainte opérationnelle qui correspond à une pente de trajectoire $\theta_{SH}$ constante d'un giravion (1) du type particulier de giravion.

43. Dispositif selon l'une quelconque des revendications 33 à 41,
**caractérisé en ce que** ladite mémoire (21) contient une contrainte opérationnelle qui correspond à la fonction de performance maximale de montée d'un giravion (1) du type particulier de giravion.

44. Dispositif selon l'une quelconque des revendications 33 à 41,
**caractérisé en ce que** ladite mémoire (21) contient une contrainte opérationnelle qui correspond à une relation représentant la vitesse sur trajectoire TA en fonction du temps.

45. Dispositif selon l'une quelconque des revendications 33 à 44,
**caractérisé en ce qu'**il comporte un pilotage automatique (25) pour agir directement sur les gouvernes dudit giravion (1) afin de gérer de façon automatique la procédure de décollage et d'atterrissage en minimisant le bruit émis par ledit giravion (1).

46. Dispositif selon l'une quelconque des revendications 33 à 45,
**caractérisé en ce que** ledit calculateur (20) élabore les corrections de la vitesse air sur trajectoire TA et de la vitesse air verticale VZA pour compenser les effets du vents et conserver une pente air sensiblement constante, ces corrections étant élaborées au rythme des données fournies par ledit récepteur (22) ainsi que par ledit variomètre et ledit équipement anémo-barométrique (8).

47. Dispositif selon l'une quelconque des revendications 33 à 46,
**caractérisé en ce que** ledit calculateur (20) transmet les consignes de pilotage au pilote, avec visualisation desdites consignes, au rythme des données fournies par ledit récepteur (22) ainsi que par ledit variomètre et ledit équipement anémo-barométrique (8).

48. Dispositif de l'une quelconque des revendications 33 à 47,
**caractérisé en ce que** ledit calculateur (20) transmet les consignes de pilotage au pilote automatique (25), lequel actionne les commandes du vol (30) et les gouvernes dudit giravion (1) du type particulier de giravion.

49. Dispositif selon l'une quelconque des revendications 33 à 48,
**caractérisé en ce que** ledit giravion (1) est un hélicoptère.

50. Dispositif selon l'une quelconque des revendications 33 à 48,
**caractérisé en ce que** ledit giravion (1) est un combiné.

51. Dispositif selon l'une quelconque des revendications 33 à 48,
**caractérisé en ce que** ledit giravion (1) est un convertible.

**Claims**

1. A method of minimising the noise emitted during the take-off and landing of a rotorcraft (1), of a particular type of rotorcraft, where, in a phase of preliminary flights in which a reference rotorcraft corresponding to a rotorcraft (1) of the said particular type is used:

a) a series of measurements is taken from the reference rotorcraft, in which during preliminary flights the values of a plurality of acoustic levels detected by a plurality p of sensors C fixed to this reference rotorcraft and representative of noise emissions are measured for n configurations of the reference rotorcraft, determined by:

- m masses M of the said reference rotorcraft,
- q speeds of rotation R1 of the main rotor (3),
- r speeds of rotation R2 of the tail rotor (4),

b) from this series of measurements a first series of n · p graphs D1 is drawn up, representing a series of equal noise levels L1 in a system of coordinates (TA, VZA), where TA is the flight path air speed and VZA is the vertical air speed of the said reference rotorcraft,

c) this first series of graphs D1 is transformed to give a second series of n · p graphs D2 representing a series of equal noise levels L2 in the system of coordinates (TA, VZA), by performing the following:

- first, making a noise correction CV representative of noise pollution in dependence on its duration of application, and
- second, making a correction CMA to correct each mass M into an apparent weight MA of the reference rotorcraft as a result of the atmospheric conditions at the altitude of flight,

d) in each graph D2, the curve of equal noise level L2P which corresponds to a maximum permissible noise level BMA is selected,

e) for each apparent weight MA, the envelope of the curves L2P in the system of coordinates (TA, VZA) is established, which determines m ranges of flight DV for which the noise is less than the said maximum permissible noise BMA,

f) in each range of flight DV, an operating range DF is selected, which determines a set of m operating ranges of the reference rotorcraft.

2. A method according to Claim 1, **characterised in that** the correction CMA consists in calculating an apparent weight MA which is equal to $M/(\rho/\rho o)$, where $(\rho/\rho o)$ is the mass per unit volume relative to air at the altitude of flight.

3. A method according to Claim 1, **characterised in that** the speed correction CV corresponds to a penalty for noise in the form 10log (V/TA), where V is a reference speed of the said rotorcraft (1).

4. A method according to Claim 3, **characterised in that** the said reference speed V is the least-noise overflight speed VS of the rotorcraft (1) in level flight.

5. A method according to Claim 3, **characterised in that** the said reference speed V is the maximum climb speed VY of the rotorcraft (1).

6. A method according to any one of Claims 1 to 5, **characterised in that** for each later phase relating to take-off and landing of a rotorcraft (1) of the particular type of rotorcraft:

a) the instantaneous equivalent mass ME of the rotorcraft (1) is calculated;

b) the operating point F without wind and the instantaneous operating range with wind DF1 of the rotorcraft (1) for the said instantaneous.equivalent mass ME are determined from the set of m operating ranges of the reference rotorcraft.

7. A method according to Claim 6, **characterised in that** the said operating ranges DF and DF1 form two angular sectors (S3, S4), each of these angular sectors having the operating point F without wind as its apex and having a respective safety margin ms in relation to two angular sectors (S1, S2) starting from the operating point F without wind.

8. A method according to Claim 7, **characterised in that** the operating point F without wind is independent of the equivalent mass ME of a rotorcraft (1) of the particular type of rotorcraft.

9. A method according to either of Claims 7 and 8, **characterised in that** the effective operating points FEF with wind are located on a straight line fFf' passing through the operating point F without wind, with the straight line fFf' being contained within the two sectors (S3, S4), which determines a control rule fFf' with wind.

10. A method according to either of Claims 7 and 8, **characterised in that** the effective operating points FEF with wind are located on two straight half-lines Fu and Ft, each of which passes through the operating point F without wind and is respectively contained within the angular sectors S3 and S4, which determines a control rule uFt with wind.

**11.** A method according to either of Claims 7 and 8, **characterised in that** the effective operating points FEF with wind are located on a curve vFw passing through the operating point F without wind, the portions vF and wF of the curve being respectively contained within the sectors S3 and S4, which determines a control rule vFw with wind.

**12.** A method according to Claim 9, **characterised in that** the control rule fFf' is independent of the equivalent mass ME of a rotorcraft (1) of the particular type of rotorcraft.

**13.** A method according to Claim 10, **characterised in that** the control rule uFt is independent of the equivalent mass ME of a rotorcraft (1) of the particular type of rotorcraft.

**14.** A method according to Claim 11, **characterised in that** the control rule vFw is independent of the equivalent mass ME of a rotorcraft (1) of the particular type of rotorcraft.

**15.** A method according to Claim 6, **characterised in that** the effective operating points FEF with wind are located on a control curve vFw with wind passing through the operating point F without wind, this curve vFw being equidistant from the ranges in which the noise is greater than the maximum permissible noise BMA.

**16.** A method according to Claim 15, **characterised in that** the control rule vFw is independent of the equivalent mass ME of a rotorcraft (1) of the particular type of rotorcraft.

**17.** A method according to any one of Claims 9 to 16, **characterised in that** an operating constraint corresponding to a flight path of constant slope $\theta_{SH}$ of a rotorcraft (1) of the particular type of rotorcraft is determined.

**18.** A method according to either of Claims 10 and 16, **characterised in that** an operating constraint corresponding to the maximum climb performance function is determined.

**19.** A method according to any one of Claims 10 to 16, **characterised in that** an operating constraint corresponding to a relationship representing speed over flight path TA as a function of time is determined.

**20.** A method according to any one of Claims 1 to 19, **characterised in that** the said plurality of noise levels includes at least the following noise levels, whereof the values are measured by the sensors C provided:

a) on that side of the fuselage (2) of the reference rotorcraft corresponding to the leading blade side:

- in a first zone N1 at the front of the fuselage (2),
- In a second zone N2 slightly forward of the main rotor (3) of the said rotorcraft (1),
- in a third zone N3 rearward of the said main rotor (3),

b) at each of the ends of the horizontal empennage (12) of the said reference rotorcraft.

**21.** A method according to any one of Claims 1 to 19, **characterised in that** the said plurality of noise levels includes at least the following noise levels, whereof the values are measured by the sensors C provided:

a) on that side of the fuselage (2) of the reference rotorcraft corresponding to the leading blade side:

- In a first zone N1 at the front of the fuselage (2),
- in a second zone N2 slightly forward of the main rotor (3) of the said rotorcraft (1),
- in a third zone N3 rearward of the said main rotor (3),

b) on a pole located in the same plane as the tail rotor (4).

**22.** A method according to either of Claims 20 and 21, **characterised In that** the plurality of noise levels additionally includes the noise levels measured in the zones M1, M2 and M3 which are respectively symmetrical to the zones N1, N2 and N3 In relation to the plane of longitudinal symmetry of the said reference rotorcraft.

**23.** A method according to any one of Claims 20 to 22, **characterised in that** the said zones N1, N2, N3, M1, M2, M3 are located on the outside of the said fuselage (2) of the said reference rotorcraft.

24. A method according to any one of Claims 20 to 22, **characterised in that** the said zones N1, N2, N3, M1, M2, M3 are located inside the said fuselage (2) of the said reference rotorcraft.

25. A method according to any one of Claims 1 to 24, **characterised in that** the said number n of configurations of the said reference rotorcraft comprises:

   - at least one mass M corresponding to m = 1,
   - at least one speed of rotation R1 of the main rotor (3) corresponding to q = 1.

26. A method according to any one of Claims 1 to 24, **characterised in that** the said number n of configurations of the said reference rotorcraft comprises:

   - three masses M corresponding to m = 3,
   - three speeds of rotation R1 of the main rotor (3) corresponding to q = 3.

27. A method according to any one of Claims 1 to 24, **characterised in that** the said number n of configurations of the said reference rotorcraft comprises:

   - three masses M corresponding to m = 3,
   - three speeds of rotation R1 of the main rotor (3) corresponding to q = 3,
   - three speeds of rotation R2 of the tail rotor (4) corresponding to r = 3.

28. A method according to any one of Claims 1 to 27, **characterised in that** the said maximum noise level BMA corresponds to the minimum noise level in level flight at nominal speed of the said rotorcraft (1).

29. A method according to any one of Claims 1 to 28, **characterised in that** the said sensors C are microphones.

30. A method according to any one of Claims 1 to 29, **characterised in that** it is used for a rotorcraft (1) of the helicopter type.

31. A method according to any one of Claims 1 to 29, **characterised in that** it is used for a rotorcraft (1) of the combined type.

32. A method according to any one of Claims 1 to 29, **characterised in that** it is used for a rotorcraft (1) of the convertible type.

33. A device for implementing the method specified in one of Claims 1 to :32, including:

   - a computer (20) equipped with a memory (21) containing the pre-established operating ranges DF with wind for the said reference rotorcraft, the said computer (20) being capable of automatically determining the operating point F without wind and the operating range DF1 with wind corresponding to the instantaneous equivalent mass ME of the said rotorcraft (1) of the particular type of rotorcraft,
   - a variometer and an anemometer/barometer unit (8) for capturing values for the air speed over flight path TA and for the vertical air speed VZA of the said rotorcraft (1),
   - a receiver (22) for determining the ground speed and the position in space of the said rotorcraft (1),
   - a means (23) for displaying control setpoints calculated by the said computer (20), and
   - at least one fuel gauge (9) for determining the instantaneous mass of the said rotorcraft (1).

34. A device according to Claim 33, **characterised in that** the said memory (21) contains a linear control rule fFf' with wind located within two angular sectors (S3, S4) determined in the operating range DF1 with wind.

35. A device according to Claim 33, **characterised in that** the Said memory, (21) contains a linear control rule uFt with wind formed by two half-lines Fu and Ft which are respectively located within the angular sectors S3 and S4 determined in the operating range DF1 with wind.

36. A device according to Claim 33, **characterised in that** the said memory (21) contains a control rule vFw with wind formed by two curve portions vF and wF which are respectively located within the angular sectors S3 and S4 determined In the operating range DF1 with wind.

**37.** A device according to Claim 33, **characterised in that** the said memory (21) contains a control rule vFw with wind determined in the operating range DF1 and formed by a curve which is equidistant from the ranges in which' the noise is greater than the maximum permissible noise BMA.

**38.** A device according to Claim 34, **characterised in that** the control rule fFf' is independent of the equivalent mass ME of a rotorcraft (1) of the particular type of rotorcraft.

**39.** A device according to Claim 35, **characterised in that** the control rule uFt is independent of the equivalent mass ME of the rotorcraft (1) of the particular type of rotorcraft.

**40.** A device according to Claim 36, **characterised in that** the control rule vFw is independent of the equivalent mass ME of the rotorcraft (1) of the particular type of rotorcraft.

**41.** A device according to Claim 37, **characterised in that** the control rule vFw is independent of the equivalent mass ME of the rotorcraft (1) of the particular type of rotorcraft.

**42.** A device according to any one of Claims 33 to 41, **characterised in that** the said memory (21) contains an operating constraint corresponding to a flight path of constant slope $\theta_{SH}$ of a rotorcraft (1) of the particular type of rotorcraft.

**43.** A device according to any one of Claims 33 to 41, **characterised in that** the said memory (21) contains an operating constraint corresponding to the maximum climb performance function of a rotorcraft (1) of the particular type of rotorcraft.

**44.** A device according to any one of Claims 33 to 41, **characterised in that** the said memory (21) contains an operating constraint corresponding to a relationship representing speed over flight path TA as a function of time.

**45.** A device according to any one of Claims 33 to 44, **characterised in that** It includes an automatic pilot (25) for acting directly on the control surfaces of the said rotorcraft (1) in order to manage automatically the procedure of take-off and landing while minimising the noise emitted by the said rotorcraft (1).

**46.** A device according to any one of Claims 33 to 45, **characterised in that** the said computer (20) makes corrections to the air speed over flight path TA and the vertical air speed VZA to compensate for the effects of wind and to maintain a substantially constant slope in the air, these corrections being made at the rate at which data is supplied by the said receiver (22) and the said variometer and the said anemometer/barometer unit (8).

**47.** A device according to any one of Claims 33 to 46, **characterised in that** the said computer (20) transmits the control setpoints to the pilot with display of the said setpoints at the rate at which data is supplied by the said receiver (22) and the said variometer and the said anemometer/barometer unit (8).

**48.** A device according to any one of Claims 33 to 47, **characterised in that** the said computer (20) transmits the control setpoints to the automatic pilot (25)., which actuates the flight controls (30) and the control surfaces of the said rotorcraft (1) of the particular type of rotorcraft.

**49.** A device according to any one of Claims 33 to 48, **characterised in that** the said rotorcraft (1) is a helicopter.

**50.** A device according to any one of Claims 33 to 48, **characterised in that** the said rotorcraft (1) is a combined rotorcraft.

**51.** A device according to any one of Claims 33 to 48, **characterised in that** the said rotorcraft (1) is a convertible rotorcraft.


**Patentansprüche**

**1.** Verfahren zum Minimieren des Lärms beim Starten und Landen eines Drehflügelflugzeugs (1) eines besonderen Typs, bei dem in einem Schritt vorangehender Flüge mit einem Referenz-Drehflügelflugzeug, das einem Drehflügelflugzeug (1) des besonderen Typs entspricht

　　a) eine Reihe von Messungen am Referenz-Drehflügelflugzeug durchgeführt werden, indem bei vorangehenden Flügen die Werte mehrerer akustischer Pegel von mehreren p Sensoren C erfasst werden, die an dem Referenz-Drehflügelflugzeug befestigt und für die Lärmemission für n Konfigurationen des Referenz-Drehflügelflugzeugs charakteristisch sind, welche bestimmt sind durch

- m Massen M des Referenz-Drehflügelflugzeugs,
- q Drehzahlbereiche R1 des Hauptrotors (3),
- r Drehzahlbereiche R2 des Heckrotors (4),

b) ausgehend von dieser Messreihe eine erste Reihe von nxp Diagrammen D1 erstellt wird, die eine Reihe von akustischen Iso-Pegeln L1 in einem Koordinatensystem (TA, VZA) zeigen, wobei TA die Flugbahngeschwindigkeit und VZA die vertikale Fluggeschwindigkeit des Referenz-Drehflügelflugzeugs sind,
c) diese erste Reihe von Diagrammen D 1 in eine zweite Reihe von nxp Diagrammen D2 umgewandelt wird, die eine Reihe von akustischen Iso-Pegeln L2 im Koordinatensystem (TA, VZA) zeigen, indem

- zum einen eine Lärmkorrektur CV durchgeführt wird, die für eine Lärmbelästigung typisch ist, welche von ihrer Dauer abhängt,
- zum anderen eine Korrektur CMA zum Korrigieren jeder Masse M in die scheinbare Masse MA des Referenz-Drehflügelflugzeugs durchgeführt wird, die aus den atmosphärischen Bedingungen in der Flughöhe resultiert,

d) in jedem Diagramm D2 die Kurve für den akustischen Iso-Pegel L2P gewählt wird, die dem maximal zulässigen Lärmpegel BMA entspricht,
e) für jede scheinbare Masse MA die Umhüllende der Kurven L2P im Koordinatensystem (TA, VZA) erstellt wird, wodurch m Flugbereiche DV festgelegt werden, in denen der Lärm geringer ist als der maximal zulässige Lärm BMA,
f) in jedem Flugbereich DV ein Betriebsbereich DF gewählt wird, wodurch eine Einheit von m Betriebsbereichen des Referenz-Drehflügelflugzeugs festgelegt wird.

2.  Verfahren nach Anspruch 1, **dadurch gekennzeichnet, dass** die Korrektur CMA darin besteht, eine scheinbare Masse MA zu berechnen, die $M/(\rho/\rho o)$ entspricht, wobei $\rho/\rho o$ die relative Dichte der Luft in der Flughöhe ausdrückt.

3.  Verfahren nach Anspruch 1, **dadurch gekennzeichnet, dass** die Geschwindigkeitskorrektur CV einem akustischen Abzug der Form 10 log (V/TA) entspricht, wobei V eine Referenzgeschwindigkeit des Drehflügelflugzeugs (1) bezeichnet.

4.  Verfahren nach Anspruch 3, **dadurch gekennzeichnet, dass** die Referenzgeschwindigkeit V die Überfluggeschwindigkeit VS im Stadium mit dem geringstem Lärm des Drehflügelflugzeugs (1) ist.

5.  Verfahren nach Anspruch 3, **dadurch gekennzeichnet, dass** die Referenzgeschwindigkeit V die maximale Steigfluggeschwindigkeit VY des Drehflügelflugzeugs (1) ist.

6.  Verfahren nach einem der Ansprüche 1 bis 5, **dadurch gekennzeichnet, dass** bei jedem späteren Schritt bezüglich des Landens und Startens eines Drehflügelflugzeugs (1) des besonderen Typs

a) die momentane Ersatzmasse ME des Drehflügelflugzeugs (1) berechnet wird,
b) der Betriebspunkt F ohne Wind und der momentane Betriebsbereich mit Wind DF1 des Drehflügelflugzeugs (1) für die momentane Ersatzmasse ME ausgehend von der Einheit der m Betriebsbereiche des Referenz-Drehflügelflugzeugs bestimmt werden.

7.  Verfahren nach Anspruch 6, **dadurch gekennzeichnet, dass** die Betriebsbereiche DF und DF1 ein doppelter Winkelsektor (S3, S4) sind, deren Scheitel jeweils der Betriebspunkt F ohne Wind ist und die jeweils eine Sicherheitsspanne ms in Bezug auf die beiden aus den Betriebspunkten F ohne Wind hervorgegangenen Winkelsektoren (S1, S2) aufweisen.

8.  Verfahren nach Anspruch 7, **dadurch gekennzeichnet, dass** der Betriebspunkt F ohne Wind unabhängig von der Ersatzmasse ME eines Drehflügelflugzeugs (1) des besonderen Typs ist.

9.  Verfahren nach einem der Ansprüche 7 und 8, **dadurch gekennzeichnet, dass** die Punkte des effektiven Betriebs mit Wind FEF auf einer Geraden fFf' liegen, die durch den Betriebspunkt ohne Wind F läuft, wobei die Gerade fFf' in dem doppelten Sektor (S3, S4) enthalten ist, wodurch ein Steuerungsgesetz fFf' mit Wind festgelegt wird.

10. Verfahren nach einem der Ansprüche 7 und 8, **dadurch gekennzeichnet, dass** die Punkte des effektiven Betriebs mit Wind FEF auf zwei Halbgeraden Fu und Ft liegen, die jeweils durch den Betriebspunkt F ohne Wind laufen und jeweils in den Winkelsektoren S3 und S4 enthalten sind, wodurch ein Steuerungsgesetz uFt mit Wind festgelegt wird.

11. Verfahren nach einem der Ansprüche 7 und 8, **dadurch gekennzeichnet, dass** die Punkte des effektiven Betriebs mit Wind FEF auf einer Kurve vFw liegen, die durch den Betriebspunkt F ohne Wind läuft, wobei die Kurvenabschnitte vF und wF jeweils in den Sektoren S3 und S4 enthalten sind, wodurch ein Steuerungsgesetz vFw mit Wind festgelegt wird.

12. Verfahren nach Anspruch 9, **dadurch gekennzeichnet, dass** das Steuerungsgesetz fFf' unabhängig von der Ersatzmasse ME eines Drehflügelflugzeugs (1) des besonderen Typs ist.

13. Verfahren nach Anspruch 10, **dadurch gekennzeichnet, dass** das Steuerungsgesetz uFt unabhängig von der Ersatzmasse ME eines Drehflügelflugzeugs (1) des besonderen Typs ist.

14. Verfahren nach Anspruch 11, **dadurch gekennzeichnet, dass** das Steuerungsgesetz vFw unabhängig von der Ersatzmasse ME eines Drehflügelflugzeugs (1) des besonderen Typs ist.

15. Verfahren nach Anspruch 6, **dadurch gekennzeichnet, dass** die Punkte des effektiven Betriebs mit Wind FEF auf einer Steuerungskurve mit Wind vFw liegen, die durch den Betriebspunkt F ohne Wind läuft, wobei sich die Kurve vFw in gleichem Abstand von den Bereichen befindet, in denen der Lärm den maximal zulässigen Lärm BMA übersteigt.

16. Verfahren nach Anspruch 15, **dadurch gekennzeichnet, dass** das Steuerungsgesetz vFw unabhängig von der Ersatzmasse ME eines Drehflügelflugzeugs (1) des besonderen Typs ist.

17. Verfahren nach einem der Ansprüche 9 bis 16, **dadurch gekennzeichnet, dass** eine Operationsbedingung bestimmt wird, die einem konstanten Bahnneigungswinkel $\theta_{SH}$ eines Drehflügelflugzeugs (1) des besonderen Typs entspricht.

18. Verfahren nach einem der Ansprüche 10 und 16, **dadurch gekennzeichnet, dass** eine Operationsbedingung bestimmt wird, die der maximalen Steigflug-Leistung entspricht.

19. Verfahren nach einem der Ansprüche 10 bis 16, **dadurch gekennzeichnet, dass** eine Operationsbedingung bestimmt wird, die einer Relation der Bahngeschwindigkeit BA über die Zeit entspricht.

20. Verfahren nach einem der Ansprüche 1 bis 19, **dadurch gekennzeichnet, dass** die mehreren akustischen Pegel mindestens die folgenden akustischen Pegel umfassen, deren Werte von den Sensoren C gemessen werden, die an folgenden Stellen angeordnet sind:

a) auf der Seite des Rumpfwerks (2) des Referenz-Drehflügelflugzeugs, die der Seite des vortreibenden Blatts entspricht:

- in einem ersten Bereich N 1 vor dem Rumpfwerk (2),
- in einem zweiten Bereich N2 etwas vor dem Hauptrotor (3) des Drehflügelflugzeugs (1),
- in einem dritten Bereich N3 hinter dem Hauptrotor (3),

b) an jedem der Enden des Höhenleitwerks (12) des Referenz-Drehflügelflugzeugs.

21. Verfahren nach einem der Ansprüche 1 bis 19, **dadurch gekennzeichnet, dass** die mehreren akustischen Pegel mindestens die folgenden akustischen Pegel umfassen, deren Werte von den Sensoren C gemessen werden, die an folgenden Stellen angeordnet sind:

a) auf der Seite des Rumpfwerks (2) des Referenz-Drehflügelflugzeugs, die der Seite des vortreibenden Blatts entspricht:

- in einem ersten Bereich N1 vor dem Rumpfwerk (2),
- in einem zweiten Bereich N2 etwas vor dem Hauptrotor (3) des Drehflügelflugzeugs (1),
- in einem dritten Bereich N3 hinter dem Hauptrotor (3),

b) an einer Stange in der Ebene des Heckrotors (4).

22. Verfahren nach einem der Ansprüche 20 und 21, **dadurch gekennzeichnet, dass** die mehreren akustischen Pegel außerdem die akustischen Pegel umfassen, die in den Bereichen M1, M2 und M3 gemessen werden, welche zu den Bereichen N1, N2 und N3 in Bezug auf die Längssymmetrieebene des Referenz-Drehflügelflugzeugs symmetrisch sind.

23. Verfahren nach einem der Ansprüche 20 bis 22, **dadurch gekennzeichnet, dass** die Bereiche N1, N2, N3, M1, M2, M3 außerhalb des Rumpfwerks (2) des Referenz-Drehflügelflugzeugs angeordnet sind.

24. Verfahren nach einem der Ansprüche 20 bis 22, **dadurch gekennzeichnet, dass** die Bereiche N1, N2, N3, M1, M2, M3 innerhalb des Rumpfwerks (2) des Referenz-Drehflügelflugzeugs angeordnet sind.

25. Verfahren nach einem der Ansprüche 1 bis 24, **dadurch gekennzeichnet, dass** die Anzahl n an Konfigurationen des Referenz-Drehflügelflugzeugs Folgendes aufweist:

- mindestens eine Masse M, die m= 1 entspricht,
- mindestens einen Drehzahlbereich R1 des Hauptrotors (3), der q=1 entspricht.

26. Verfahren nach einem der Ansprüche 1 bis 24, **dadurch gekennzeichnet, dass** die Anzahl n an Konfigurationen des Referenz-Drehflügelflugzeugs Folgendes aufweist:

- drei Massen M, die m=3 entsprechen,
- drei Drehzahlbereiche R 1 des Hauptrotors (1), die q=3 entsprechen.

27. Verfahren nach einem der Ansprüche 1 bis 24, **dadurch gekennzeichnet, dass** die Anzahl n an Konfigurationen des Referenz-Drehflügelflugzeugs Folgendes aufweist:

- drei Massen M, die m=3 entsprechen,
- drei Drehzahlbereiche R1 des Hauptrotors (3), die q=3 entsprechen,
- drei Drehzahlbereiche R2 des Heckrotors (4), die r=3 entsprechen.

28. Verfahren nach einem der Ansprüche 1 bis 27, **dadurch gekennzeichnet, dass** der maximale Lärmpegel BMA dem minimalen Lärmpegel im Stadium mit Nenngeschwindigkeit des Drehflügelflugzeugs (1) entspricht.

29. Verfahren nach einem der Ansprüche 1 bis 28, **dadurch gekennzeichnet, dass** die Sensoren C Mikrofone sind.

30. Verfahren nach einem der Ansprüche 1 bis 29, **dadurch gekennzeichnet, dass** es in einem Drehflügelflugzeug (1) vom Typ eines Hubschraubers eingesetzt wird.

31. Verfahren nach einem der Ansprüche 1 bis 29, **dadurch gekennzeichnet, dass** es in einem Kombinationsflugschrauber (1) eingesetzt wird.

32. Verfahren nach einem der Ansprüche 1 bis 29, **dadurch gekennzeichnet, dass** es in einem Wandelflugzeug (1) eingesetzt wird.

33. Vorrichtung zum Einsatz des in einem der Ansprüche 1 bis 32 angegebenen Verfahrens, die Folgendes aufweist:

- einen Rechner (20) mit einem Speicher (21), der die vorher festgelegten Betriebsbereiche mit Wind DF für das Referenz-Drehflügelflugzeug enthält, wobei der Rechner (20) den Betriebspunkt F ohne Wind und den Betriebsbereich mit Wind DF1 für die momentane Ersatzmasse ME des Drehflügelflugzeugs (1) des besonderen Typs automatisch bestimmen kann,
- ein Variometer und eine anemobarometrische Ausrüstung (8) zum Erfassen der Flugbahngeschwindigkeit TA und der vertikalen Fluggeschwindigkeit VZA des Drehflügelflugzeugs (1),

- einen Empfänger (22) zum Bestimmen der Grundgeschwindigkeit und der Position im Raum des Drehflügelflugzeugs (1),
- ein Mittel zum Anzeigen (23) der vom Rechner (20) ausgearbeiteten Anweisungen,
- mindestens eine Kraftstoffanzeige (9) zum Bestimmen der momentanen Masse des Drehflügelflugzeugs (1).

34. Vorrichtung nach Anspruch 33, **dadurch gekennzeichnet, dass** der Speicher (21) ein lineares Gesetz zur Steuerung mit Wind fFf' enthält, das in einem doppelten Winkelsektor (S3, S4) liegt, der im Betriebsbereich mit Wind DF1 festgelegt ist.

35. Vorrichtung nach Anspruch 33, **dadurch gekennzeichnet, dass** der Speicher (21) ein lineares Gesetz zur Steuerung mit Wind uFt enthält, das aus zwei Halbgeraden Fu und Ft besteht, die in den Winkelsektoren S3 beziehungsweise S4 im Betriebsbereich mit Wind DF1 liegen.

36. Vorrichtung nach Anspruch 33, **dadurch gekennzeichnet, dass** der Speicher (21) ein Gesetz zur Steuerung mit Wind vFw enthält, das aus zwei Kurvenabschnitten vF und wF besteht, die im Winkelsektor S3 beziehungsweise S4 liegen, welche im Betriebsbereich mit Wind DF1 festgelegt sind.

37. Vorrichtung nach Anspruch 33, **dadurch gekennzeichnet, dass** der Speicher (21) ein Gesetz zur Steuerung mit Wind vFw enthält, das im Betriebsbereich DF1 festgelegt wird und aus einer Kurve in gleichem Abstand von den Bereichen besteht, in denen der Lärm den maximal zulässigen Lärm BMA übersteigt.

38. Vorrichtung nach Anspruch 34, **dadurch gekennzeichnet, dass** das Steuerungsgesetz fFf' unabhängig von der Ersatzmasse ME eines Drehflügelflugzeugs (1) des besonderen Typs ist.

39. Vorrichtung nach Anspruch 35, **dadurch gekennzeichnet, dass** das Steuerungsgesetz uFt unabhängig von der Ersatzmasse ME des Drehflügelflugzeugs (1) des besonderen Typs ist.

40. Vorrichtung nach Anspruch 36, **dadurch gekennzeichnet, dass** das Steuerungsgesetz vFw unabhängig von der Ersatzmasse ME des Drehflügelflugzeugs (1) des besonderen Typs ist.

41. Vorrichtung nach Anspruch 37, **dadurch gekennzeichnet, dass** das Steuerungsgesetz vFw unabhängig von der Ersatzmasse ME des Drehflügelflugzeugs (1) des besonderen Typs ist.

42. Vorrichtung nach einem der Ansprüche 33 bis 41, **dadurch gekennzeichnet, dass** der Speicher (21) eine Operationsbedingung enthält, die einem konstanten Bahnneigungswinkel $\theta_{SH}$ eines Drehflügelflugzeugs (1) des besonderen Typs entspricht.

43. Vorrichtung nach einem der Ansprüche 33 bis 41, **dadurch gekennzeichnet, dass** der Speicher (21) eine Operationsbedingung enthält, die der maximalen Steigflug-Leistung eines Drehflügelflugzeugs (1) des besonderen Typs entspricht.

44. Vorrichtung nach einem der Ansprüche 33 bis 41, **dadurch gekennzeichnet, dass** der Speicher (21) eine Operationsbedingung enthält, die einer Relation der Bahngeschwindigkeit BA über die Zeit entspricht.

45. Vorrichtung nach einem der Ansprüche 33 bis 44, **dadurch gekennzeichnet, dass** sie eine automatische Steuerung (25) umfasst, die direkt auf die Steuerflächen des Drehflügelflugzeugs (1) wirkt, um das Starten und Landen automatisch zu steuern und dabei die Lärmemissionen des Drehflügelflugzeugs (1) zu minimieren.

46. Vorrichtung nach einem der Ansprüche 33 bis 45, **dadurch gekennzeichnet, dass** der Rechner (20) die Korrekturen der Flugbahngeschwindigkeit TA und der vertikalen Luftgeschwindigkeit VZA ausarbeitet, um die Wirkungen der Winde zu kompensieren und eine im Wesentlichen konstante Flugneigung beizubehalten, wobei die Korrekturen im Rhythmus der vom Empfänger (22) sowie vom Variometer und der anemobarometrischen Ausrüstung (8) gelieferten Daten ausgearbeitet werden.

47. Vorrichtung nach einem der Ansprüche 33 bis 46, **dadurch gekennzeichnet, dass** der Rechner (20) die Steuerungsanweisungen dem Piloten übermittelt und sie im Rhythmus der vom Empfänger (22) sowie vom Variometer und der anemobarometrischen Ausrüstung (8) gelieferten Daten anzeigt.

**48.** Vorrichtung nach einem der Ansprüche 33 bis 47, **dadurch gekennzeichnet, dass** der Rechner (20) die Steuerungsanweisungen an den Autopiloten (25) übermittelt, der die Flugsteuerungen (30) und die Steuerflächen des Drehflügelflugzeugs (1) vom besonderen Typ betätigt.

**49.** Vorrichtung nach einem der Ansprüche 33 bis 48, **dadurch gekennzeichnet, dass** das Drehflügelflugzeug (1) ein Hubschrauber ist.

**50.** Vorrichtung nach einem der Ansprüche 33 bis 48, **dadurch gekennzeichnet, dass** das Drehflügelflugzeug (1) ein Kombinationsflugschrauber ist.

**51.** Vorrichtung nach einem der Ansprüche 33 bis 48, **dadurch gekennzeichnet, dass** das Drehflügelflugzeug (1) ein Wandelflugzeug ist.

Fig.1

Fig.2

Fig.3A

VSH

VZA

VZS

TA

$\Theta_A = \Theta_{SH}$

Fig.3B

TA, TAV

VZA

VSH

$\Theta_A$

$\Theta_{SH}$

VAS

VSH

VZS

TA

$\Theta_{SH}$

Fig.3C

VZA

VAS

$\Theta_A$

Fig.3D

TA

VZS

VSH

$\Theta_{SH}$

$\Theta_A$

VAS

VZAS

VZA

VHAS

## Fig.4

## Fig.6

Fig.5

Fig.7A

Fig.7B

Fig.7C

Fig.7D

Fig.7E

Fig.8

**EP 1 730 032 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2736045 B
- JP 09254897 B
- EP 945841 A

- JP 2763045 B
- FR 2801966
- FR 2801967